# EUROPÄISCHE PATENTSCHRIFT

(11) **EP 0 568 990 B1**
(45) Veröffentlichungstag und Bekanntmachung des Hinweises auf die Patenterteilung: **27.01.1999**
(21) Anmeldenummer: 93107279.7
(22) Anmeldetag: 05.05.1993
(51) Int. Cl.: F16D 13/75

(54) **Druckplattenanordnung für eine Kraftfahrzeug-Reibungskupplung**
Pressure plate arrangement in a friction clutch of an automotive vehicle
Agencement du plateau de pression d'un embrayage à friction pour véhicule automobile

(30) Priorität: 06.05.1992 DE 4214996; 04.03.1993 DE 4306688
(43) Veröffentlichungstag der Anmeldung: 10.11.1993
(73) Patentinhaber: Mannesmann Sachs Aktiengesellschaft, 97424 Schweinfurt (DE)
(72) Erfinder: Link, Achim, W-8720 Schweinfurt (DE); Weidinger, Reinhold, W-8721 Unterspiesheim (DE); Schulz-Andres, Heiko, W-8721 Poppenhausen (DE); Elsner, Klaus, W-8720 Schweinfurt (DE); Wiedmann, Rainer, W-8721 Hambach (DE); Nenninger, Ralf, W-8727 Werneck (DE); Weiss, Michael, W-8721 Dittelbrunn (DE)
(74) Vertreter: Liska, Horst, Dr.-Ing.

(56) Entgegenhaltungen:
- WO-A-88/08492
- DE-A- 3 518 781
- FR-A- 2 599 446
- FR-A- 2 606 477
- GB-A- 2 004 000
- GB-A- 2 022 729

## Beschreibung

Die Erfindung betrifft eine Druckplattenanordnung für eine Kraftfahrzeug-Reibungskupplung und eine Kupplungsanordnung, und insbesondere betrifft die Erfindung eine Druckplattenanordnung mit automatischem Verschleißausgleich.

Aus der DE-A-35 18 781 (GB-A-2 176 256) ist eine Kraftfahrzeug-Reibungskupplung bekannt, deren Druckplatteneinheit wie üblich ein an einem Schwungrad befestigtes Kupplungsgehäuse, eine in dem Kupplungsgehäuse relativ zu diesem drehfest, aber axial verlagerbar angeordnete Anpreßplatte und eine mit Vorspannung zwischen dem Kupplungsgehäuse und der Anpreßplatte eingespannte Membranfeder umfaßt. Die Membranfeder spannt die Anpreßplatte über Reibbeläge einer Kupplungsscheibe gegen das Schwungrad. Die Druckplatteneinheit umfaßt einen automatischen Verschleißausgleichsmechanismus mit einer im Abstiltzweg der Membranfeder zwischen der Membranfeder und der Anpreßplatte angeordneten Nachstelleinrichtung, die bei Verschleiß der Reibbeläge der Kupplungsscheibe und ausgekuppelter Reibungskupplung eine axiale Verlagerung der Anpreßplatte weg von der Membranfeder bewirkt. Die Nachstelleinrichtung hat hierzu mehrere in Umfangsrichtung verteilte, keilförmige Spreizkörper, die im Betrieb durch Fliehkraft in dem bei ausgerückter Reibungskupplung zwischen der Anpreßplatte und der Membranfeder verschleißbefingt sich ergebenden Spalt hineinwandern. Die bekannte Reibungskupplung hat eine reibkraftarretierte Wegbegrenzungseinrichtung, die den Lüftweg cer Anpreßplatte relativ zum Kupplungsgehäuse begrenzt und es der Membranfeder während des Ausrückvorgangs der Reibungskupplung und bei Überschreiten eines vorbestimmten Spiels der Wegbegrenzungseinrichtung ermöglicht, von ihrer Auflage an der Anpreßplatte abzuheben, so daß die keilförmigen Spreizkörper für den Spielausgleich zwischen Membranfeder und Anpreßplatte eintreten können.

Als nachteilig hat sich bei dieser bekannten Konstruktion herausgestellt, daß der automatische Verschleißausgleich nur nach dem Zurücklegen des Spiels der Wegbegrenzungseinrichtung möglich ist und hier nur in voll ausgerücktem Zustand der Kupplung. Eine solche Konstruktion ist beispielsweise nicht in Verbindung mit einem hydraulischen Ausrückersystem verwendbar, da solche Ausrückersysteme schon kleinere Verschleißwege innerhalb des Spiels automatisch ausgleichen würden, ohne daß der vorgesehene Verschleißausgleichsmechanismus der Druckplauteneinheit wirksam würde.

Aus der FR-A-25 99 446 ist eine Kraftfahrzeug-Reibungskupplung bekannt, bei welcher eine Verschleißerfassung durch zwischen der Anpreßplatte und dem Kupplungsgehäuse wirkende Verschleißerfassungselemente vorgesehen ist. Gemäß einer Ausführungsform können die Verschleißerfassungselemente einen sich um die Anpreßplatte herum erstreckenden und an einer Außenumfangsfläche derselben reibschlüssig angreifenden Ring umfassen, der mit radial nach außen abstehenden Vorsprüngen in entsprechende Öffnungen im Kupplungsgehäuse eingreift. Die Öffnungen im Kupplungsgehäuse sind auf die Vorsprünge derart abgestimmt, daß zwischen diesen beiden Elementen in axialer Richtung Bewegungsspiel vorhanden ist. Im Betrieb auftretender Verschleiß von Reibbelägen führt zu einer Axialverlagerung der Anpreßplatte auf das Schwungrad zu, wobei dann die Vorsprünge in den Öffnungen im Kupplungsgehäuse anstoßen und den an der Anpreßplatte angreifenden Ring gegen axiale Bewegung blockieren. Bei einem nachfolgenden Ausrückvorgang wird die Anpreßplatte in der entgegengesetzten axialen Richtung bewegt, und zwar so weit, bis die Vorsprünge an den anderen axialen Enden der Öffnungen im Kupplungsgehäuse anstoßen und somit den Ring und die Anpreßplatte gegen weitere axiale Bewegung blockieren. Nach dem Auftreten einer derartigen Blockierung kann dann der aufgetretene Verschleiß durch eine zwischen der Anpreßplatte und der Membranfeder angeordnete Verschleißnachstellvorrichtung kompensiert werden. In einer anderen Ausgestaltung ist in der FR-A-25 99 446 anstelle des Reibrings eine Mehrzahl von in axiale Öffnungen an einer Rückseite der Anpreßplatte reibschlüssig eingreifenden Stiften vorgesehen, die mit ihren anderen axialen Enden wiederum Öffnungen im Kupplungsgehäuse durchsetzen und in diesen Öffnungen mit axialem Bewegungsspiel gehalten sind.

Es ist Aufgabe der Erfindung, eine Druckplattenanordnung für eine Kraftfahrzeug-Reibungskupplung und eine Kupplungsanordnung anzugeben, die betriebssicher auch ein kleines Verschleißspiel selbsttätig ausgleichen kann. Die Druckplattenanordnung soll auch in Verbindung mit hydraulischen Kupplungsbetätigungseinrichtungen einsetzbar sein.

Erfindungsgemäß wird diese Aufgabe durch die in den unabhängigen Ansprüchen angegebene Druckplattenanordnung bzw. Kupplungsanordnung gelöst.

Tritt bei einer solchen Konstruktion an den Reibbelägen ein gewisser Verschleiß auf, so wird jeder Spielgeber während des Einkuppelvorgangs durch den gehäusefesten ersten Anschlag gegenüber der Anpreßplatte um das Maß des Verschleißes verschoben und anschließend wird während des darauffolgenden Auskuppelvorgangs der Verschleißausgleich durchgeführt. Die Konstruktion ermöglicht somit einen stufenlosen Verschleißausgleich, sofern eine stufenlos arbeitende Nachstelleinrichtung vorgesehen ist. Weiterhin ist durch diese Konstruktion sichergestellt, daß die Membranfeder in allen Betriebszuständen während der gesamten Lebensdauer der Reibungskupplung in derselben Einbaustellung verbleibt, so daß die Federkraftcharakteristik optimal ausgelegt werden kann und während der gesamten Lebensdauer optimal bleibt. Die zeitliche Invarianz der Charakteristik kann dazu ausgenutzt werden, die Membranfeder für eine höhere Anpreßkraft zu dimensionieren, oder bei vorgegebener Anpreßkraft kann eine kleinere Membranfeder Verwendung finden.

Die Spielgeber sind zweckmäßigerweise in zumindest angenähert parallel zur Drehachse verlaufenden Öffnungen der Anpreßplatte geführt und in den Öffnungen zur Arretierung selbsthemmend verkantbar. In dieser Art in der Anpreßplatte arretierte Spiel geber können einerseits bei Verschleiß mit sehr geringer Kraft verstellt werden, andererseits erlaubt die Selbsthemmung die Übertragung großer Anschlagkräfte. Zugleich kann der Verschleißausgleich ohne Wegverlust durchgeführt werden. Die Selbsthemmung kann durch geeignete geometrische Dimensionierung der Spielgeber und der Öffnungen in der Anpreßplatte wie auch durch geeignete Wahl der Reibwerte sichergestellt werden. Bevorzugt sind Federmittel vorgesehen, die die Spielgeber in deren selbsthemmend verkantete Stellung vorspannen, so daß die Anpreßplatte die Spielgeber bei einer Lüftbewegung der Anpreßplatte mitnimmt. Zusätzlich oder alternativ kann die selbsthemmende Verkantung der Spielgeber auch dadurch erreicht werden, daß der zweite Anschlag auf der Membranfeder direkt aufliegt. Bevorzugt ist der zweite Anschlag und die Membranfeder hierbei so geformt, daß beim Ausrücken der Reibungskupplung eine die Selbsthemmung der Spielgeber in der Öffnung der Anpreßplatte unterstützende Kraftkomponente entsteht. Dies läßt sich beispielsweise dadurch erreichen, daß die gegenseitigen Auflageflächen des zweiten Anschlags und der Membranfeder bezogen auf eine achsnormale Ebene einen Neigungswinkel haben, der so gewählt ist, daß die Auflagekraft eine den Selbsthemmeffekt unterstützende Kraftkomponente entlang der Auflagefläche hat, die größer als die zwischen den Auflageflächen wirkende Reibkraft ist. In den letztgenannten Ausführungsformen, wie auch bei sonstigen Varianten mit auf einer Membranfeder aufliegenden Spielgebern von sogenannten "gedrückten" Kupplungen, werden die Spielgeber zugleich als Lüfteinrichtung für die Anpreßplatte ausgenutzt. Durch die vorstehend erläuterte Gestaltung der Spielgeber und der Membranfeder wird zudem erreicht, daß die Selbsthemmung erhalten bleibt, obwohl der Außenumfang der Membranfeder der gedrückten Kupplung sich auf einer gekrümmten Bahn bewegt, die unter Umständen ohne die erläuterte Neigung der Auflageflächen die Selbsthemmeigenschaften der Spielgeber aufheben würde.

In einer Variante wird vorgeschlagen, daß jeder Spielgeber gegen eine Reibkraft axial in der Anpreßplatte verschiebbar geführt ist. Zwar muß die Reibkraft von der Membranfeder überwunden werden, was zu Lasten der Anpreßkraft geht, mit der die Anpreßplatte gegen das Schwungrad gedrückt wird, doch hat sich herausgestellt, daß eine geringe Reibung zwischen den Spielgebern und der Anpreßplatte unter bestimmten Betriebszuständen, beispielsweise bei Torsionsschwingungen und axialen Schwingungen, die Funktionsweise der Spielgeber positiv beeinflußt. Die reibschlüssige Arretierung der Spielgeber in der Anpreßplatte kann als alleiniges Arretierungsmittel vorgesehen sein; den Reibschluß erhöhende Mittel können aber auch zusätzlich bei der vorstehend erläuterten Variante mit selbsthemmender Arretierung günstig sein. Eine reibschlüssige Arretierung läßt sich auf sehr einfache Weise beispielsweise dadurch erreichen, daß jeder Spielgeber einen als federnde Spannhülse ausgebildeten Schiebebolzen umfaßt, der in einer zumindest angenähert parallel zur Drehachse verlaufenden Öffnung der Anpreßplatte gegen eine von der Spannhülse erzeugte Reibkraft verschiebbar geführt ist.

Bei den Spielgebern kann es sich um Blechformteile handeln, die axial beweglich an der Anpreßplatte geführt sind oder aber um Winkelhebel oder dergleichen, die an anpreßplattenfesten Achsen gelagert sind und mit einem Hebelarm am ersten Anschlag aufliegen, während der zweite Hebelarm den zweiten Anschlag bildet. In einer besonders einfachen Variante ist jedoch vorgesehen, daß jeder Spielgeber ein in einer Öffnung oder Bohrung der Anpreßplatte geführten Schiebebolzen und einen an diesem befestigten, den zweiten Anschlag bildenden Hebel auf der von der Kupplungsscheibe abgewandten Seite der Anpreßplatte aufweist. Spielgeber dieser Art lassen sich leicht herstellen, haben einen einfachen Aufbau und sorgen trotzdem für eine exakte Begrenzung der Spielausgleichsbewegung der Nachstelleinrichtung, insbesondere da sie ohne Platzprobleme an mehreren Stellen am Umfang der Anpreßplatte verteilt angeordnet werden können.

Der Hebel kann direkt auf dem Verschleißweg-Ausgleichsorgan der Nachstelleinrichtung oder einem seinerseits direkt auf dem Verschleißweg-Ausgleichsorgan aufliegenden Auflagering aufliegen. Ist in einem solchen Fall der Anpreßplatte eine die Anpreßplatte in Lüftrichtung spannende Lüftfeder zugeordnet, so können die Funktionen der Kupplungsbetätigung, d.h. des Ein- und Ausrückens der Kupplung einerseits und der Arretierung der Nachstelleinrichtung andererseits, konstruktiv voneinander getrennt werden, so daß die jeweils betroffenen Bauteile speziell für den ihnen zugedachten Verwendungszweck ausgelegt werden können.

Andererseits kann der Hebel jedes Spielgebers auf der Membranfeder aufliegen, d.h. unter Zwischenschaltung der Membranfeder und gegebenenfalls eines zur Drehachse konzentrischen Auflagerings auf der Nachstelleinrichtung aufliegen. In einem solchen Fall kann auf Lüftfedern für die Anpreßplatte gegebenenfalls verzichtet werden, da die Membranfeder bei ihrer Ausrückbewegung die Anpreßplatte über die Spielgeber mitnimmt. Die letztgenannte Version eignet sich insbesondere für sogenannte "gedrückte" Kupplungen, bei welchen die Nachstelleinrichtung bevorzugt zwischen dem Bereich des Außenumfangs der Membranfeder und der Anpreßplatte abgestützt ist.

Für sogenannte "gezogene" Kupplungen, bei welchen die Nachstelleinrichtung zweckmäßigerweise zwischen einem Durchmesserbereich der Membranfeder kleiner als deren Außendurchmesser und der Anpreßplatte abgestützt ist, wird vorgeschlagen, daß die Hebel der einzelnen Spielgeber auf der Außenseite des Kupplungsgehäuses angeordnet sind und durch Öffnungen des Kupplungsgehäuses bis an die Membranfeder heranreichen oder durch Öffnungen der Membranfeder bis an einen an der Membranfeder anliegenden Auflagering heranreichen. Auf diese Weise läßt sich die vorstehend erläuterte, bevorzugte Variante von Spielgebern auch bei gezogenen Kupplungen einsetzen.

Um sowohl bei niedrigen als auch bei hohen Drehzahlen die Funktion der Nachstelleinrichtung gleichbleibend erhalten zu können, ist jeder Spielgeber zweckmäßigerweise so ausgebildet, daß er bezogen auf seinen in der Öffnung der Anpreßplatte liegenden Schwenkpunkt im wesentlichen fliehkraftentlastet ist.

Weiterhin ist es vorteilhaft, daß jeder Spielgeber so in der Anpreßplatte fixiert ist, daß er bezogen auf die Öffnung der Anpreßplatte gegen Verdrehen gesichert ist, sich also mit seinem Hebel nicht um seinen Schiebebolzen drehen kann. Für die Verdrehsicherung kann auf der zur Drehachse benachbarten Seite der Öffnung ein Führungsstift, beispielsweise in Form einer radial federnden Spannhülse parallel zur Öffnung von der Anpreßplatte abstehen und in eine Bohrung des Hebels des Spielgebers eingreifen. Eine solche Verdrehsicherung ist besonders betriebssicher. Es ist jedoch auch möglich, die Kontur des von dem Hebel jedes Spielgebers gebildeten Anschlag so zu wählen, daß der Spielgeber relativ zur Membranfeder oder einem ihrer Auflageringe oder der Anpreßplatte drehfest fixiert ist. Für eine solche Fixierung ist kein zusätzliches Bauteil erforderlich. Eine drehfeste Fixierung jedes Spielgebers läßt sich in besonders einfacher Weise auch dadurch erreichen, daß der Hebel des Spielgebers in eine Öffnung des Kupplungsgehäuses hineinreicht und den Spielgeber relativ zum Kupplungsgehäuse drehfest fixiert.

In einer bevorzugten Ausgestaltung ist zwischen jedem Spielgeber und der Anpreßplatte eine Feder angeordnet, die den zweiten Anschlag auf die Anpreßplatte zu vorspannt. Diese Feder sorgt bei der Kupplungsmontage für die Anlage des Spielgebers an dem gehäusefesten ersten Anschlag, wodurch automatisch eine Grundeinstellung erreicht wird. Bei Ausführungsformen, bei welchen der Spielgeber einen in einer Öffnung der Anpreßplatte verschiebbar geführten Verschiebebolzen aufweist, kann die Feder besonders raumsparend untergebracht werden, wenn der Schiebebolzen auf seinem dem Schwungrad zugewandten Ende einen Bund aufweist und die Feder zwischen dem Bund und der Anpreßplatte abgestützt ist.

In Ausführungsformen, bei welchen die Arretierung des Spielgebers an der Anpreßplatte durch Verkanten des Schiebebolzens in der Öffnung erfolgt, ist die Feder zweckmäßigerweise so gestaltet oder angeordnet, daß sie zugleich ein Moment erzeugt, welches für eine spielfreie Anlage zwischen der Öffnung der Anpreßplatte und dem in der Öffnung geführten Schiebebolzen sorgt. Die Feder sorgt damit dafür, daß bei der Kupplungsmontage unverzüglich Selbsthemmung zwischen dem Schiebebolzen und der Öffnung auftritt und zwar unabhängig davon, ob die Selbsthemmung bei geeigneter Konstruktion auch durch die Membranfeder bewirkt wird.

Der Spielausgleich zwischen dem Schiebebolzen und der ihn führenden Öffnung der Anpreßplatte läßt sich auf besonders einfache Weise dadurch erreichen, daß die Feder als Kegel feder ausgebildet ist, die den Schiebebolzen umschließt, mit ihrem durchmesserkleineren Ende an dem Bund abgestützt ist und zur Erzeugung eines auf den Schiebebolzen wirkenden Spielausgleichsmoments mit ihrem durchmessergrößeren Ende bezogen auf den Schiebebolzen nach radial außen versetzt an der Anpreßplatte abgestützt ist. Für die Führung des durchmessergrößeren Endes der Kegelfeder kann die Anpreßplatte ein zu der den Schiebebolzen führenden Öffnung exzentrisches Sackloch haben.

Alternativ kann die Feder jedoch auch als Zugfeder ausgebildet sein und zur Erzeugung des Spielausgleichsmoments bezogen auf den Schiebebolzen nach radial außen versetzt an der Anpreßplatte und einem an dem schwungradfernen Ende des Schiebebolzens befestigten Teil, beispielsweise dem vorstehend erwähnten Hebel, eingehängt sein. Eine derartige Feder läßt sich besonders leicht montieren.

Es wird weiterhin vorgeschlagen, zwischen dem Schiebebolzen und der ihn führenden Öffnung bzw. Bohrung reibkrafterhöhende Mittel vorzusehen. Solche Maßnahmen können beispielsweise darin bestehen, daß der Schiebebolzen und/oder die Öffnung Oberflächen mit einem erhöhten Reibwert haben. Eine Erhöhung des Reibwerts kann beispielsweise durch eine geeignete Beschichtung erreicht werden. Die Oberflächen können jedoch auch mit einer Rillung bzw. Randelung versehen werden. In jedem Fall wird durch diese Maßnahmen sichergestellt, daß bei extremen Betriebszuständen der Brennkraftmaschine des Kraftfahrzeugs, insbesondere auch bei Torsionsschwingungen und axialen Schwingungen, die Funktionssicherheit des Spielgebers gewährleistet bleibt.

Die Nachstelleinrichtung als solche kann herkömmlich ausgebildet sein. In einer bevorzugten Ausführungsform ist vorgesehen, daß das Verschleißausgleichsorgan einen zur Drehachse konzentrischen, radial geschlitzten, nach radial außen sich verjüngenden Konusring umfaßt, der mit radialer, in Richtung einer Durchmesseränderung, insbesondere einer Durchmesservergrößerung wirkender Eigenspannung an einer der Membranfeder zugewandten Führungsfläche, insbesondere einer konusförmigen Schrägfläche der Anpreßplatte radial beweglich geführt ist. Eine solche Nachstelleinrichtung ist mit vergleichsweise wenig Aufwand herzustellen und kommt ohne zusätzliche Federeinrichtungen aus.

Vorzugsweise ist zwischen dem Konusring und der Membranfeder ein Auflagering angeordnet, der mit mehreren in Umfangsrichtung gegeneinander versetzten, zur Drehachse parallelen Zentrierstiften an der Anpreßplatte zentriert ist. Der Auflagering definiert eine exakt vorgegebene Auflage zwischen der Nachstelleinrichtung und der Membranfeder und gegebenenfalls auch gegenüber den Hebeln der Spielgeber.

Im folgenden werden Ausführungsbeispiele der Erfindung anhand einer Zeichnung näher erläutert. Hierbei zeigt:
- Fig. 1: einen Axiallängsschnitt durch die obere Hälfte einer gezogenen Kraftfahrzeug-Reibungskupplung, deren Druckplatteneinheit eine automatische Verschleiß-Ausgleichseinrichtung gemäß der Erfindung umfaßt;
- Fig. 2: einen Axiallängsschnitt durch die obere Hälfte einer Druckplatteneinheit einer gedrückten Kraftfahrzeug-Reibungskupplung;
- Fig. 3: eine Detaildarstellung der Druckplatteneinheit aus Fig. 2;
- Fig. 4: einen Teilschnitt durch eine Variante der Druckplatteneinheit nach Fig. 2;
- Fig. 5: einen Axiallängsschnitt durch die obere Hälfte einer Variante der Druckplatteneinheit aus Fig.1;
- Fig. 6: einen Axiallängsschnit durch die obere Hälfte einer weiteren Variante der Druckplatteneinheit aus Fig. 2;
- Fig. 7: eine Schnittansicht, gesehen entlang einer Linie VII-VII in Fig. 6;
- Fig. 8: einen Axiallängsschnitt durch die obere Hälfte einer weiteren Variante der Druckplatteneinheit aus Fig. 2 und
- Fig. 9: eine Detailansicht eines Auflagerings der Druckplatteneinheit aus Fig. 8.

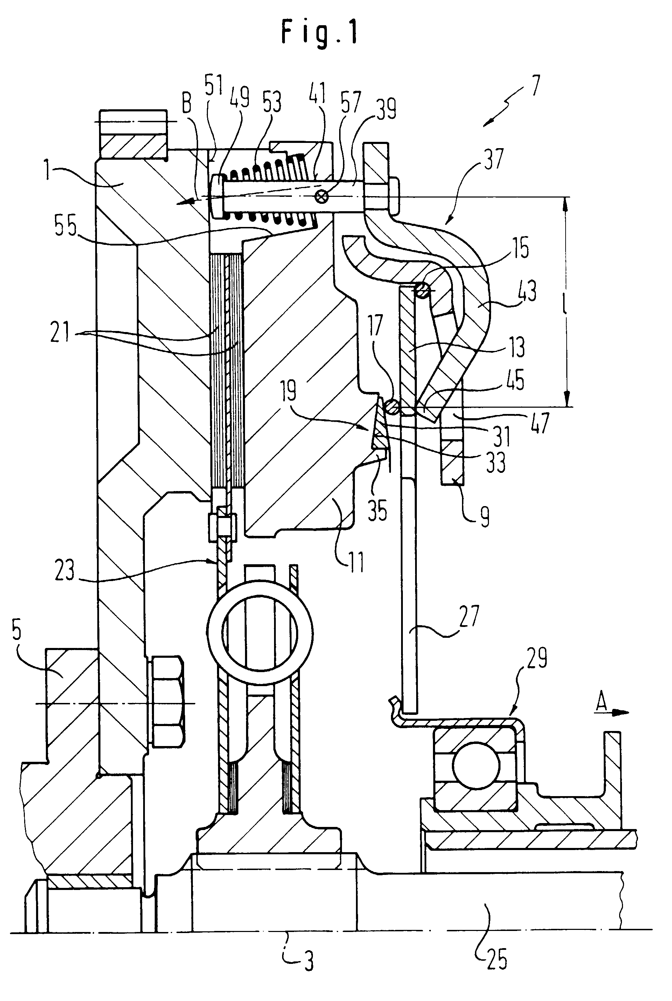

Fig. 1 zeigt eine Kraftfahrzeug-Reibungskupplung mit einem Schwungrad 1, welches an einer um eine Drehachse 3 rotierenden Kurbelwelle 5 einer Brennkraftmaschine befestigt ist. An dem Schwungrad 1 ist eine Druckplatteneinheit 7 befestigt, welche ein an dem Schwungrad 1 gehaltenes, beispielsweise angeschraubtes Kupplungsgehäuse 9, eine in nicht näher dargestellter Weise an dem Kupplungsgehäuse 9 drehfest, aber axial verlagerbar geführte Anpreßplatte 11 und eine zwischen dem Kupplungsgehäuse 9 und der Anpreßplatte 11 eingespannte Membranfeder 13 umfaßt. Die Membranfeder 13 stützt sich an ihrem Außenumfang über einen Auflagering 15 an dem Kupplungsgehäuse und an einem verglichen mit dem Außendurchmesser kleineren Durchmesser über einen Auflagering 17 und eine nachfolgend noch näher erläuterte Nachstelleinrichtung 19 an der Anpreßplatte 11 ab. Die Membranfeder 13 belastet die Anpreßplatte 11 in Richtung auf das Schwungrad 1 zu. Zwischen der Anpreßplatte 11 und dem Schwungrad 1 ist mit ihren Reibbelägen 21 eine Kupplungsscheibe 23 angeordnet, die drehfest auf einer Eingangswelle 25 eines nicht näher dargestellten Getriebes sitzt. Die Membranfeder 13 hat nach radial innen abstehende Federzungen 27, die mit einem Ausrücker 29 in Verbindung stehen. Zum Auskuppeln der im dargestellten Ausführungsbeispiel "gezogenen" Kupplung wird der Ausrücker 29 in Richtung eines Pfeils A bewegt, der über die Federzungen 27 den am Auflagering 17 anliegenden Bereich der Membranfeder 13 vom Schwungrad 1 axial wegbewegt und somit die Anpreßplatte 11 und damit die Kupplungsscheibe 23 entlastet.

Die Nachstelleinrichtung 19 umfaßt einen geschlitzten, nach radial außen sich verjüngenden Konusring 31 im Abstützkraftweg zwischen dem Auflagering 17 und der Anpreßplatte 11. Der Konusring 31 liegt auf einer beispielsweise gleichfalls konusförmigen Schrägfläche 33 auf, die die gleiche Neigung hat, wie der ihr zugewandte Flächenbereich des Konusrings 31 und ist so zwischen dem Auflagering 17 und der Schrägfläche 33 eingebaut, daß er aufgrund seiner Eigenspannung unter Durchmesservergrößerung zwischen die Schrägfläche 33 und den Auflagering 17 radial hineingetrieben wird. Zumindest im Neuzustand der Reibungskupplung wird der zur Drehachse 3 konzentrische Konusring 31 nach radial innen hin durch einen Absatz 35 der Anpreßplatte 11 fixiert. Der Konusring 31 hat zwei nach radial außen hin schräg aufeinander zu laufende Konusflächen und wird bei Verschleiß der Reibbeläge 21 durch seine Eigenspannung in den aufgrund des Verschleißes sich vergrößernden Spalt zwischen der Schrägfläche 33 und dem Auflagering 17 hineingetrieben, sobald sich dieser Spalt verschleißbedingt erweitert.

Am Umfang der Druckplatteneinheit 7 verteilt sind mehrere Spielgeber 37 axial beweglich an der Anpreßplatte 11 geführt, die den Abstand zwischen der Schrägfläche 33 und dem Auflagering 17 festlegen. Die Spielgeber 37 übertragen die vom Ausrücker 29 in die Membranfeder 13 eingeleitete Ausrückbewegung auf die Anpreßplatte 11. Jeder der Spielgeber 37 umfaßt einen Schiebebolzen 39 mit zylindrischer Außenkontur, dessen Mittelachse parallel zur Drehachse 3 verläuft, und der in einer Bohrung 41 der Anpreßplatte 11 radial außerhalb der Reibbeläge 21 verschiebbar geführt ist. An seinem dem Schwungrad 1 fernen Ende des Schiebebolzens 39 ist ein Betätigungshebel 43 befestigt, beispielsweise angenietet, der das Kupplungsgehäuse 9 von außen umgreift und mit seinem radial nach innen weisenden Ende 45 durch eine Öffnung 47 des Kupplungsgehäuses 9 hindurchgreift und auf der von der Anpreßplatte 11 abgewandten Seite der Membranfeder 13 auf der Membranfeder 13 aufliegt. Das Ende 45 des Betätigungshebels 43 liegt dem Auflagering 17 axial gegenüberliegend auf demselben Durchmesser an der Membranfeder 13 auf. An seinem dem Schwungrad 1 zugewandten Ende trägt der Schiebebolzen 39 einen Kopf 49, der sich an einer Anlagefläche 51 des Schwungrads 1 abstützt. Zwischen dem Kopf 49 und der Anpreßplatte 11 ist eine Kegelfeder 53 eingespannt, die den Schiebebolzen 39 umschließt und sich mit ihrem durchmesserkleineren Ende am Kopf 49 abstützt. Das durchmessergrößere Ende der Kegel feder 53 wird von einer Sackbohrung 55 der Anpreßplatte 11 geführt. Die Kegel feder 53 übt auf den Schiebebolzen 39 eine Kraft B aus, die den Abstand zwischen dem Kopf 49 und der Anlagefläche 51 bis zum Anschlagkontakt zu verringern sucht. Da darüber hinaus das in der Sackbohrung 55 geführte, durchmessergrößere Ende der Kegelfeder 53 zur radial äußeren Seite der Bohrung 41 hin versetzt ist, erzeugt die Kraft B, bezogen auf einen in der Bohrung 41 sich befindenden virtuellen Schwenkpunkt 57 des Schiebebolzens 39, ein Moment, welches eine spielfreie Anordnung des Schiebebolzens 39 in der Bohrung 41 bewirkt. Wie Fig. 1 weiterhin zeigt, hat die Berührungsstelle der Membranfeder 13 mit dem Auflagering und dem Ende 45 des Betätigungshebels 43 einen radialen Abstand 1 von der Bohrung 41 bzw. der Längsachse des Schiebebolzens 39. Die Ausrückbewegung der Membranfeder 13 übt damit gleichfalls auf den Schiebebolzen 39 ein Moment bezogen auf den Schwenkpunkt 57 aus, das gleichsinnig zu dem von der Kraft B erzeugten Moment wirkt. Der Abstand 1 zwischen der Längsachse des Schiebebolzens 39 und dem Auflagebereich der Membranfeder 13 ist so gewählt, daß in Verbindung mit dem Reibungskoeffizienten zwischen dem Schiebebolzen 39 und der Bohrung 41 bei der Ausrückbewegung des Ausrückers 29 in Richtung A Selbsthemmung zwischen dem Schiebebolzen 39 und der Bohrung 41 entsteht, wodurch die Anpreßplatte 11 über die Betätigungshebel 43 der Spielgeber 37 mitgenommen, d.h. gelüftet, wird. Die zur drehfesten, aber axial verlagerbaren Führung der Anpreßplatte 11 am Kupplungsgehäuse 9 vorgesehenen Organe, beispielsweise Tangentialblattfedern, sind so ausgebildet, daß sie keine den Lüftvorgang unterstützende, zur Membranfeder 13 hin gerichtete Axialkraft erzeugen.

Die automatische Verschleißnachstellung arbeitet folgendermaßen:

Wird durch das Einkuppeln, beispielsweise während eines Anfahrvorgangs, ein merkbarer Verschleiß an den aneinanderliegenden Reibflächen der Reibbeläge 21 einerseits und des Schwungrads 1 und der Anpreßplatte 11 andererseits erzeugt, so wird zwischen der Membranfeder 13 und den radial inneren Enden 45 der Betätigungshebel 43 ein Spalt mit einer dem Verschleiß entsprechenden Größe verbleiben. Bei dem ersten nachfolgenden Ausrückvorgang wird die Membranfeder 13 somit an den Enden 45 der Betätigungshebel 43 zur Anlage kommen und dabei gleichzeitig den Verschleißabstand auf die dem Schwungrad 1 zugewandte Seite verlegen. Zwischen dem Auflagering 17 und dem Konusring 31 entsteht somit Spiel, das es dem Konusring 31 aufgrund seiner radialen Vorspannung ermöglicht, sich nach radial außen entlang der Schrägfläche 33 zu erweitern, bis das Spiel aufgebraucht ist. Da andererseits während des Ausrückvorgangs zwischen dem Schiebebolzen 39 und der Bohrung 41 Selbsthemmung besteht, kann sich der Konusring 31 nur in einem durch dieses Spiel bestimmten Ausmaß verlagern. Somit ist sichergestellt, daß beim nächsten Einkuppelvorgang die Membranfeder 13 ihre ursprüngliche Stellung wieder einnehmen kann, während die Nachstelleinrichtung 19 den durch Verschleiß vergrößerten Abstand zwischen der Membranfeder 13 und der Anpreßplatte 11 ausgleicht. Die Membranfeder 13 behält also über den gesamten möglichen Verschleißweg ihre ursprüngliche, für optimalen Betrieb dimensionierte Position während der gesamten Lebensdauer der Reibungskupplung bei. Dies hat den Vorteil, daß das Federvolumen der Membranfeder voll genutzt werden kann, da die Lage der Membranfeder konstant bleibt.

Bei der Montage der Reibungskupplung wird der Konusring 31 mit radial nach außen gerichteter Vorspannung eingebaut. Er muß somit während des Montagevorgangs an dem Absatz 35 gehalten werden. Die übrigen Bauteile der Nachstelleinrichtung 19 und der Spielgeber 37 sind so aufeinander abgestimmt, daß die Köpfe 49 der Schiebebolzen 39 im Neuzustand durch die Kraft der Kegelfedern 53 zur Anlage kommen oder nur einen geringen Abstand haben. Dadurch ist gewährleistet, daß im Neuzustand einerseits der Konusring 31 auf seiner radial innersten Stellung gehalten wird und andererseits kein Spiel zwischen der Membranfeder 13 und den mit der Membranfeder 13 im Durchmesserbereich des Auflagerings 17 mit ihr in Verbindung stehenden Bauteilen, d.h. den Enden 45 der Betätigungshebel 43, dem Auflagering 17, dem Konusring 31 und der Anpreßplatte 11 auftritt. Die vorstehend erläuterten Selbsthemmeigenschaften der Spielgeber 37 sorgen dann bereits anfänglich dafür, daß die Anpreßplatte 11 über die Spielgeber 37 gelüftet werden kann. Die Kegelfeder 53 hat hierbei lediglich dafür zu sorgen, daß im eingerückten Zustand der Kupplung der Betätigungshebel 43 stets in seiner dem Schwungrad 1 am nächsten liegenden Stellung gehalten wird und daß unabhängig vom Kupplungszustand das Spiel zwischen dem Schiebebolzen 39 und der Bohrung 41 aufgehoben ist. Dadurch ist sichergestellt, daß unmittelbar bei Beginn einer Ausrückbewegung entsprechend dem Pfeil A die Abhubbewegung über die Betätigungshebel 43 auf die Anpreßplatte 11 übertragen werden kann. Für den Fall, daß während der Montage der Reibungskupplung die Schiebebolzen 39 beispielsweise aufgrund ungünstiger Toleranzen mit ihren Köpfen 49 nicht vollständig zur Anlage am Schwungrad 1 kommen können, so ist die Funktion der automatischen Nachstelleinrichtung im Bereich des Konusrings 31 lediglich so lange aufgehoben, bis infolge Verschleißes der Reibbeläge 21 der Spalt zwischen den Köpfen 49 und der Anlagefläche 51 des Schwungrads 1 aufgebraucht ist. Nachfolgend setzt die automatische Verschleißeinstellung ein.

Anstelle eines konzentrisch zur Drehachse 3 angeordneten, geschlitzten Konusrings 31 können auch mehrere voneinander gesonderte Konuselemente vorgesehen sein, die in Umfangsrichtung verteilt angeordnet sind und von denen jedes einzelne durch Federmittel nach radial außen vorgespannt ist. Gegebenenfalls können auch die auf die Konuselemente einwirkenden Fliehkräfte für die Nachstellung ausgenutzt werden.

Da die Spielgeber 37 bzw. deren Betätigungshebel 43 nicht symmetrisch zur Verschiebeachse der Schiebebolzen 39 sind, sind zusätzliche Verdrehsicherungsmaßnahmen vorgesehen. Im Ausführungsbeispiel der Fig. 1 durchdringen die Betätigungshebel 43 die Öffnungen 47 des Kupplungsgehäuses 9 und werden in den Öffnungen 47 verdrehsicher geführt.

Im folgenden werden Varianten von Druckplatteneinheiten erläutert. Soweit gleichwirkende Komponenten verwendet werden, so sind sie mit den Bezugszahlen vorangegangen erläuterter Komponenten bezeichnet und zur Unterscheidung mit einem Buchstaben versehen. Zur Erläuterung des Aufbaus und der Wirkungsweise wird in jedem Fall auf die vorangegangene Beschreibung Bezug genommen.

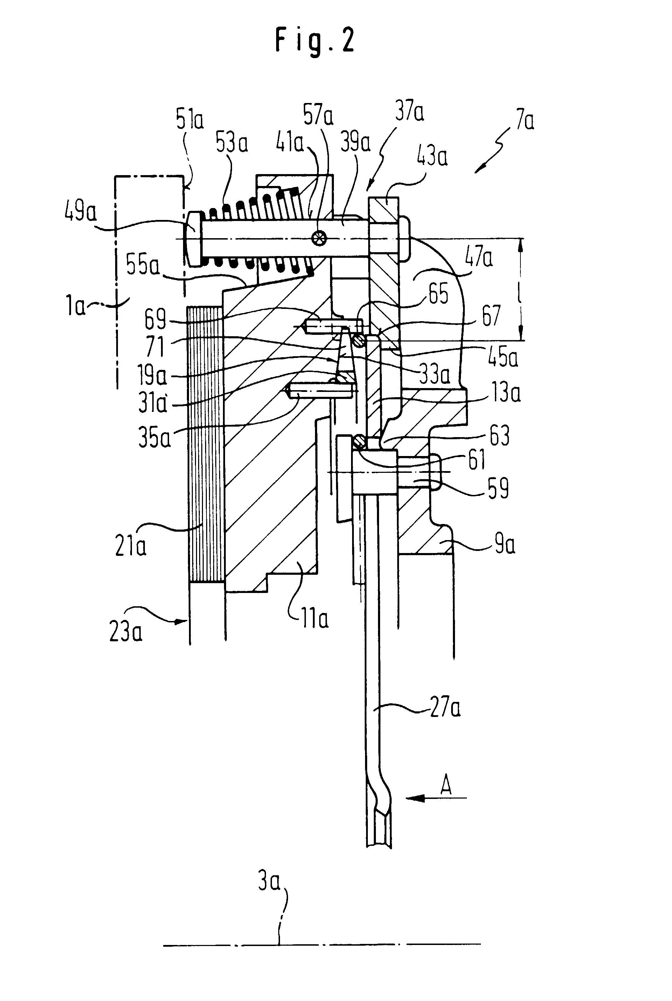

Im Unterschied zu Fig. 1 zeigt Fig. 2 eine Druckplatteneinheit 7a einer gedrückten Kupplung, bei welcher die Membranfeder 13a durch mehrere am Umfang verteilte Distanzbolzen 59 in einem mittleren Bereich, d.h. im Bereich des Übergangs ihres ringförmig geschlossenen Federkörpers zu den Federzungen 27a fixiert ist. Die Membranfeder 13a wird von den Distanzbolzen 59 in diesem Bereich entlang eines Kippkreises an einem Kipplagerring bzw. Auflagering 61 und einer axial gegenüberliegenden Auflage 63 des Kupplungsgehäuses 9a geführt. Im Bereich ihres Außendurchmessers stützt sich die Membranfeder 13a über einen Auflagering 65 und die Nachstelleinrichtung 19a an der Anpreßplatte 11a für die Übertragung der Aus- und Einrückbewegung ab. Die Spielgeber 37a haben Betätigungshebel 43a, die gleichfalls im Außendurchmesserbereich auf der von der Anpreßplatte 11a abgewandten Seite der Membranfeder aufliegen. Sie sind zur Verdrehsicherung gegenüber der Membranfeder 13a mit Aussparungen 67 versehen. Im übrigen entsprechen die Spielgeber 37a den anhand der Fig. 1 erläuterten Spielgebern.

Wie Fig. 2 ferner zeigt, ist der nach radial außen vorgespannte Konusring 31a an mehreren in Umfangsrichtung verteilten Zentrierstiften 35a radial fixiert, welche den Ansätzen 35 aus Fig. 1 entsprechen. Für die radiale Fixierung des Auflagerings 65 sind an der Anpreßplatte 11a mehrere in Umfangsrichtung verteilt angeordnete, entsprechend den Zentrierstiften 35a achsparallel zur Drehachse 3a abstehende Zentrierstifte 69 vorgesehen. Der Konusring 31a hat im Bereich der Zentrierstifte 69 Schlitze 71.

Die Druckplatteneinheit 7a der Fig. 2 wird durch Verstellen der Federzungen 27a in Richtung des Pfeils A zum Schwungrad la hin ausgerückt, wodurch sich der Außenumfangsbereich der Membranfeder 13a vom Schwungrad la axial wegbewegt. Die wiederum selbsthemmend in den Bohrungen 41a der Anpreßplatte la verkantbaren Spielgeber 37a entsprechen in ihrer Funktionsweise den Spielgebern der gezogenen Kupplung aus Fig. 1. Auch die Nachstelleinrichtung 19a arbeitet in der bereits beschriebenen Weise.

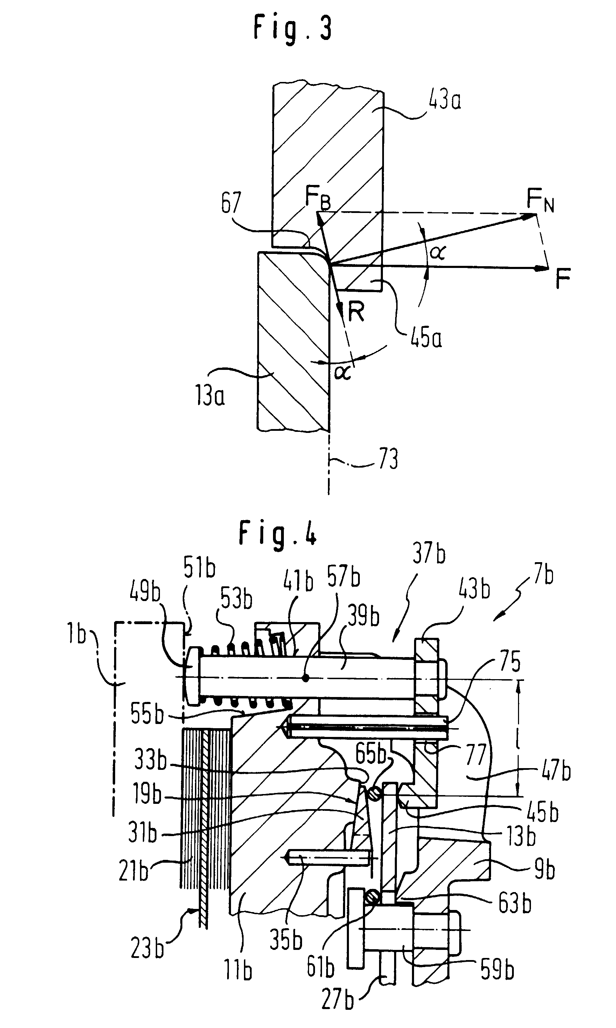

Eine Besonderheit der Konstruktion aus Fig. 2 ist in Fig. 3 im Detail dargestellt. Der im wesentlichen achsnormal zur Drehachse 3a verlaufende, radial äußere Bereich der Membranfeder 13a führt beim Ausrücken der Kupplung eine annähernd kreisbogenförmige Bewegung mit einer radial nach innen gerichteten Bewegungskomponente durch. Die radial nach innen gerichtete Komponente kann unter Umständen dazu führen, daß die Selbsthemmung zwischen dem Schiebebolzen 39a und der Bohrung 41a verzögert einsetzt oder sogar aufgehoben wird. Diesem Effekt kann entgegengewirkt werden, wenn die Membranfeder 13a und der Betätigungshebel 43a über schräg zur achsnormalen Ebene verlaufende Auflageflächen aneinanderliegen. Wie Fig. 3 zeigt, sind die Auflageflächen unter einem Winkel α gegenüber der bei 73 angedeuteten achsnormalen Ebene geneigt. Die von der Membranfeder 13a auf die Betätigungshebel 43a übertragene Normalkraft F_{N} ist damit gleichfalls an dem Winkel α zu der in Achsrichtung der Schiebebolzen 39a und damit parallel zur Drehachse 3a wirkenden Kraft F geneigt. Durch diese Neigung entsteht in der Ebene der Berührungsfläche eine Kraft F_{B}, während aufgrund der Reibung zwischen den geneigten Auflageflächen in entgegengesetzter Richtung eine Reibkraft R auftritt. Die Reibkraft R ergibt sich aus dem Wert der Kraft F multipliziert mit dem Reibungskoeffizienten µ der aneinanderliegenden Auflageflächen. Durch geeignete Wahl des Winkels α und des Reibungskoeffizienten µ wird sichergestellt, daß die Kraft F_{B} stets größer ist als die Reibkraft R, so daß beim Betätigen der Kupplung die Kraftkomponente in radialer Richtung überwiegt, die den Selbsthemmechanismus zwischen dem Schiebebolzen 39a und der Bohrung 41a unterstützt. Die Reibkraft R definiert in üblicher Weise einen Reibungswinkel ϕ. Bezogen auf den Reibungswinkel muß für die Unterstützung des Selbsthemmechanismus sichergestellt sein, daß der Winkel α stets größer ist als der Winkel ϕ.

Die vergrößerte Darstellung der Fig. 3 zeigt weiterhin, daß die Aussparung 67 am radial inneren Ende 45a des Betätigungshebels 43a mit geringem radialem Abstand vom Außendurchmesser der Membranfeder 13a verläuft und aufgrund der Erstreckung des Betätigungshebels 43a in Umfangsrichtung zugleich eine Verdrehsicherung für den Spielgeber 37a bildet.

Im Unterschied zur Kupplung der Fig. 1 sind die Betätigungshebel 43a der Spielgeber 37a dem Schwenkpunkt 57a vergleichsweise nahe angeordnet, so daß der Schwerpunkt jedes Spielgebers 37a und sein Schwenkpunkt 57a im wesentlichen in einer gemeinsamen achsnormalen Ebene liegen. Die Spielgeber 37a sind damit fliehkraftentlastet, und die Selbsthemmung ist damit unabhängig von der momentanen Drehzahl.

Fig. 4 zeigt eine Variante einer gedrückten Kupplung, die sich von der Kupplung der Fig. 2 und 3 in erster Linie durch die Art der Verdrehsicherung des Spielgebers 37b unterscheidet. Radial zwischen dem Schiebebolzen 39b des Spielgebers 37b und dem Ende 45b des Betätigungshebels 43b jedes Spielgebers 37b ist in die Anpreßplatte llb achsparallel zum Schiebebolzen 39b ein Führungsstift, hier in Form einer Spannhülse 75, feststehend eingesetzt, der durch eine Bohrung 77 des Betätigungshebels 43b reicht und den Spielgeber 37b verdrehsicher an der Anpreßplatte 11b führt. Das auf der Membranfeder 13b aufliegende Ende 45b des Betätigungshebels 43b ist darüber hinaus als Schneide ausgebildet.

Die anhand der Fig. 1 bis 4 beschriebenen Druckplatteneinheiten ermöglichen eine im wesentlichen frei von Axialkräften arbeitende automatische Nachstellung innerhalb der Reibungskupplung. Die axiale Kraftkomponente der Kegelfedern 53, 53a und 53b kann in diesem Zusammenhang vernachlässigt werden, da sie im Vergleich zu den übrigen Axialkräften sehr klein ist. Sie ist insbesondere erheblich kleiner als die bei herkömmlichen Nachstelleinrichtungen aufzubringende Verschiebekraft. Die Arbeitsweise der Nachstelleinrichtung sorgt dafür, daß die Nachstellung auch in Verbindung mit einem hydraulischen Kupplungsbetätigungssystem gewährleistet ist. Dies ist insbesondere darauf zurückzuführen, daß der Verschleißausgleich prinzipiell zu Beginn des Ausrückwegs stattfindet und unabhängig von der Größe des daran anschließenden Ausrückwegs ist. Bei herkömmlichen Nachstelleinrichtungen muß hingegen ein festgelegter maximaler Ausrückweg zurückgelegt werden, bevor eine Nachstellung bewirkt werden kann. Dies ist in Verbindung mit hydraulischen Ausrücksystemen ungünstig, da solche Systeme ihrerseits automatisch eine Nachstellung bewirken, wenn ein bestimmter Ausrückweg zurückgelegt wurde, so daß bei ungünstigen Bemessungsverhältnissen die Nachstellung nicht in der Kupplung, sondern im Ausrücksystem erfolgt. Die erfindungsgemäße Konstruktion läßt sich aber auch aus folgendem Grund vorteilhaft mit einem hydraulischen Ausrücksystem kombinieren. Da die Membranfeder ihre relative Lage innerhalb der Reibungskupplung auch bei Verschleiß nicht ändert, kann das hydraulische Ausrücksystem für einen sehr geringen axialen Ausrückerhub bemessen werden, was den Platzbedarf verringert. Diese Vorteile ergeben sich auch für die nachfolgend erläuterten Ausführungsformen.

Bei den anhand der Fig. 1 bis 4 erläuterten Druckplatteneinheiten stützen sich die Spielgeber über die Membranfeder und die Nachstelleinrichtung an der Anpreßplatte ab. Die Spielgeber werden zugleich zum Lüften der Anpreßplatte mit ausgenutzt, so daß sich eine gesonderte Lüftfederung der Anpreßplatte erübrigt. Bei den nachfolgenden beschriebenen Ausführungsbeispielen wird die Anpreßplatte unabhängig von der Funktion der Spielgeber und der Nachstelleinrichtung gelüftet.

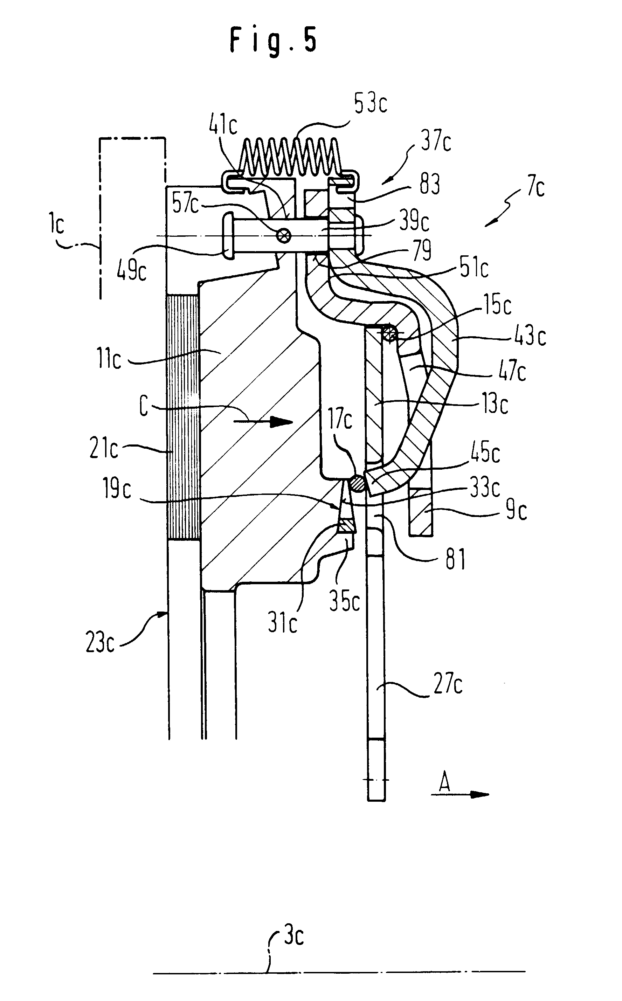

Fig. 5 zeigt wiederum eine Druckplatteneinheit 7c einer gezogenen Reibungskupplung, die sich von der Kupplung der Fig. 1 in erster Linie durch die Konstruktion der Spielgeber 37c unterscheidet. Die Membranfeder 13c der Druckplatteneinheit 7c ist wiederum im Bereich ihres Außenumfangs über den Auflagering 15c am Kupplungsgehäuse 9c abgestützt und liegt auf einem kleineren Durchmesser über den Auflagering 17c und den geschlitzten Konusring 31c der Nachstelleinrichtung 19c an der Anpreßplatte 11c auf. Die Anpreßplatte 11c ist wiederum drehfest, aber axial verlagerbar in nicht näher dargestellter Weise an dem Kupplungsgehäuse 9c geführt, beispielsweise über herkömmliche Tangentialblattfedern, wobei jedoch im Unterschied zur Konstruktion der Fig. 1 beispielsweise über die Tangentialblattfedern die Anpreßplatte 11c in Richtung eines Pfeils C durch eine Lüftkraft belastet wird.

Die am Umfang der Anpreßplatte 11c verteilten Spielgeber 37c haben wiederum einen Schiebebolzen 39c, der in einer Bohrung 41c achsparallel zur Drehachse 3c verschiebbar geführt ist und auf der Seite des Schwungrads 1c durch einen Kopf 49c gesichert ist. Die Schiebebolzen 39c durchdringen das Kupplungsgehäuse 9c in Öffnungen 79 und tragen auf der Außenseite des Kupplungsgehäuses wiederum Betätigungshebel 43c. Jeder Betätigungshebel 43c reicht vom Schiebebolzen 39c nach radial innen und durchdringt im Bereich des Auflagerings 17c eine im Kupplungsgehäuse 9c vorgesehene Öffnung 47c. Das Ende 45c des Betätigungshebels 43c reicht ferner durch eine im Bereich des Auflagerings 17c gelegene Öffnung 81 der Membranfeder 13c und liegt auf der zur Anpreßplatte 11c benachbarten Seite der Membranfeder 13c auf dem Auflagering 17c auf. Die Spielgeber 37c werden von den Betätigungshebeln 43c in den Öffnungen 47c des Kupplungsgehäuses 9c verdrehsicher geführt.

Um Spiel der Schiebebolzen 39c in den Bohrungen 41c auszugleichen und die Selbsthemmung der Spielgeber 37c sicherzustellen, ist auf der radial außen gelegenen Seite der Schiebebolzen 39c jeweils eine Zugfeder 53c angeordnet, die einerseits an der Anpreßplatte 11c und andererseits in ein radial nach außen abstehendes Ende 83 des Betätigungshebels 43c eingehängt ist. Die Funktion der Zugfedern 53c entspricht derjenigen der Kegelfeder 53. Während bei der Kupplung der Fig. 1 der Schiebebolzen mit seinem schwungradseitigen Ende an einer Anlagefläche des Schwungrads anliegt, wird bei der Konstruktion der Fig. 5 das mit dem Schwungrad 1c fest verbundene Kupplungsgehäuse 9c ausgenutzt. Das Kupplungsgehäuse 9c bildet im Bereich der Schiebebolzen 39c eine Anlagefläche 51c, an der der Betätigungshebel 43c anschlägt.

Bei der Montage der Reibungskupplung sorgen die Zugfedern 53c dafür, daß die Betätigungshebel 43c an den Anlageflächen 51c des Kupplungsgehäuses 9c anliegen. Gleichzeitig wird bei der Montage zunächst dafür gesorgt, daß der nach radial außen federnde Konusring 31c in seiner radial innersten, d.h. durchmesserkleinsten Stellung, gehalten wird. Bei am Kupplungsgehäuse 9c anliegenden Betätigungshebeln 43c wird der Konusring 31c freigegeben, so daß er aufgrund seiner Eigenspannung sich geringfügig aufweiten kann, so daß er sowohl an der Schrägfläche 33c als auch über den Auflagering 17c an den radial inneren Enden 45c der Betätigungshebel 43c zur Anlage kommt und die durch die Zugfedern 53c bereits eingeleitete Selbsthemmung der Schiebebolzen 39c in den Bohrungen 41c unterstützt.

Zum Ausrücken der Kupplung werden die Federzungen 27c der Membranfeder 13c in Richtung des Pfeils A bewegt, wobei die Anpreßplatte llc durch ihre Lüftfederung in Richtung des Pfeils C verlagert wird. Die Lüftfederkraft ist hierbei so auf die Funktion der Nachstelleinrichtung 19c abgestimmt, daß sie einen eventuellen Verschleißausgleich nicht unterbindet. Verschleißt während eines Einrückvorgangs der Reibbelag 21c der Kupplungsscheibe 23c übermäßig, beispielsweise aufgrund eines lange anhaltenden Schlupfes bei Übertragung eines großen Drehmoments, so bewegt sich die Anpreßplatte 11c um den Betrag des Verschleißes axial auf das Schwungrad 1c zu, während die an den Anlageflächen 51c des Kupplungsgehäuses 9c anliegenden Spielgeber 37c dieser Bewegung nicht folgen können. Zwischen den radial inneren Enden 45c der Betätigungshebel 43c und dem Auflagering 17c entsteht damit ein dem Belagverschleiß entsprechendes Spiel. Bei eingerückter Kupplung wird die Nachstelleinrichtung 19c durch die Auflagekraft der Membranfeder 13c daran gehindert, dieses Spiel auszugleichen. Die Auflagekraft wird jedoch beim ersten nachfolgenden Ausrücken der Kupplung aufgehoben, so daß im gleichen Maß, wie die Membranfeder 13c von dem Auflagering 17c abgehoben wird, der Konusring in den Spalt zwischen dem Auflagering 17c und der Anpreßplatte llc hineinwandern und den Spalt zwischen dem Auflagering 17c und den Enden 45c der Betätigungshebel 43c ausfüllen kann. Der Konusring 31c muß hierbei gegen die Kraft der in Richtung des Pfeils C wirkenden Lüftfederung der Anpreßplatte 11c wirken. Ist der durch den Verschleiß entstandene Spalt ausgefüllt, so unterstützt die Lüftfederung erneut die Selbsthemmung zwischen den Schiebebolzen 39c und den Bohrungen 41c zusätzlich zu dem von den Zugfedern 53c an den Spielgebern 37c erzeugten Kippmoment.

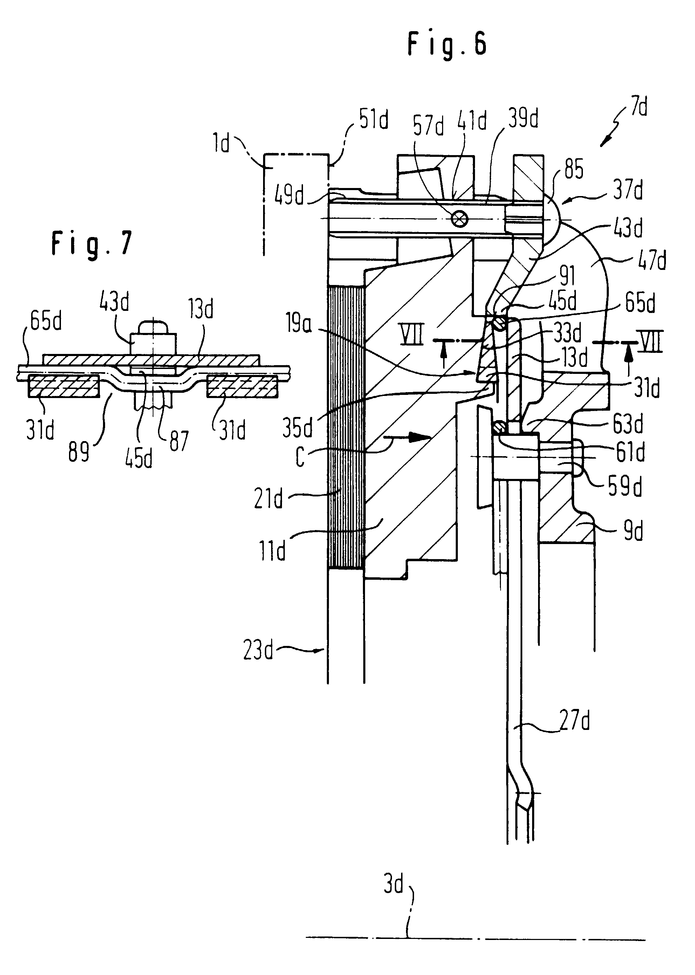

Bei den vorangegangen erläuterten Ausführungsformen werden die Spielgeber durch Verkippen selbsthemmend in den Bohrungen der Anpreßplatte arretiert. Um bereits anfänglich für einen Spielausgleich zwischen den Schiebebolzen der Spielgeber und den Bohrungen der Anpreßplatte zu sorgen, können zusätzliche, ein Kippmoment auf die Spielgeber ausübende Federn vorgesehen sein. Fig. 6 zeigt eine Druckplatteneinheit 7d einer gedrückten Kupplung, bei welcher der Schiebebolzen des Spielgebers 37d die Form einer radial elastischen Spannhülse 39d hat, die aufgrund ihrer radialen Federeigenschaften durch Reibung in der Bohrung 41d spielfrei sitzt. Auf Federn zum Ausgleich des Spiels zwischen der Spannhülse 39d und der Bohrung 41d kann deshalb verzichtet werden. An dem vom Schwungrad 1d fernen Ende der Spannhülse 39d ist mittels eines Kopfbolzens 85 ein Betätigungshebel 43d befestigt, der auf der von der Anpreßplatte 11d abgewandten Seite des am Außendurchmesser der Membranfeder 13d anliegenden Auflagerings 65d mit seinem Ende 45d abgestützt ist. Um in diesem Bereich nicht mit der Membranfeder 13d zu kollidieren, ist, wie Fig. 7 zeigt, der Auflagering 65d zur Bildung eines Auflagebereichs 87 von der Membranfeder 13d weggebogen, wobei der Konusring 31d zur Unterbringung des Aufnahmebereichs 87 mit einer Aussparung 89 versehen ist. Das Ende 45d des Betätigungshebels 43d ist durch eine Aussparung 91 verjüngt und hält den Spielgeber 37d unverdrehbar in der Bohrung 41d.

Bei der Montage der Druckplatteneinheit 7d werden die Spannhülsen 39d und damit die Betätigungshebel 43d in eine Grundstellung gestellt, in der die Spannhülsen 39d an der Anlagefläche 51d des Schwungrads 1d spielfrei anliegen. Bei Verschleiß an den Reibbelägen 21d der Kupplungsscheibe 23d wird die Anpreßplatte 11d durch die Kraft der Membranfeder 13d zum Schwungrad 1d hin bewegt, während die Spielgeber 37d ihre Lage relativ zum Schwungrad 1d und zum Kupplungsgehäuse 9d unter Vergrößerung ihres Abstands zur Anpreßplatte 11d beibehalten. Beim nachfolgenden Ausrückvorgang der Kupplung sorgt die Kraft der Lüfteinrichtung der Anpreßplatte 11d dafür, daß diese sich in Richtung des Pfeils C bewegen möchte, während gleichzeitig die radiale Vorspannung des Konusrings 31d das Spiel zwischen den Betätigungshebeln 43d und der Anpreßplatte 11d auszugleichen sucht. Die über die Nachstelleinrichtung 19d aufgebrachte axiale Kraftkomponente unterstützt dabei den Reibschluß zwischen der Bohrung 41d und der Spannhülse 39d im Sinne einer Selbsthemmung.

Es sei erwähnt, daß auch bei den vorstehend erläuterten Ausführungsformen, bei welchen die Spielgeber durch Verkanten selbsthemmend in Bohrungen der Anpreßplatte geführt sind, den Reibschluß erhöhende Maßnahmen vorgesehen sein können. Auch bei den vorstehend erläuterten Ausführungsformen können die Schiebebolzen als Spannhülsen ausgebildet sein, oder die Schiebebolzen und/oder die Bohrungen können mit reibungserhöhenden Oberflächenstrukturen, beispielsweise rauhen Oberflächen, Reibpaarungen mit hohem Reibwert oder aber Riffelungen oder Rillen oder dergleichen, versehen sein. Entsprechende Maßnahmen sind auch in der Ausführungsform nach Fig. 6 oder der folgend erläuterten Variante verwendbar.

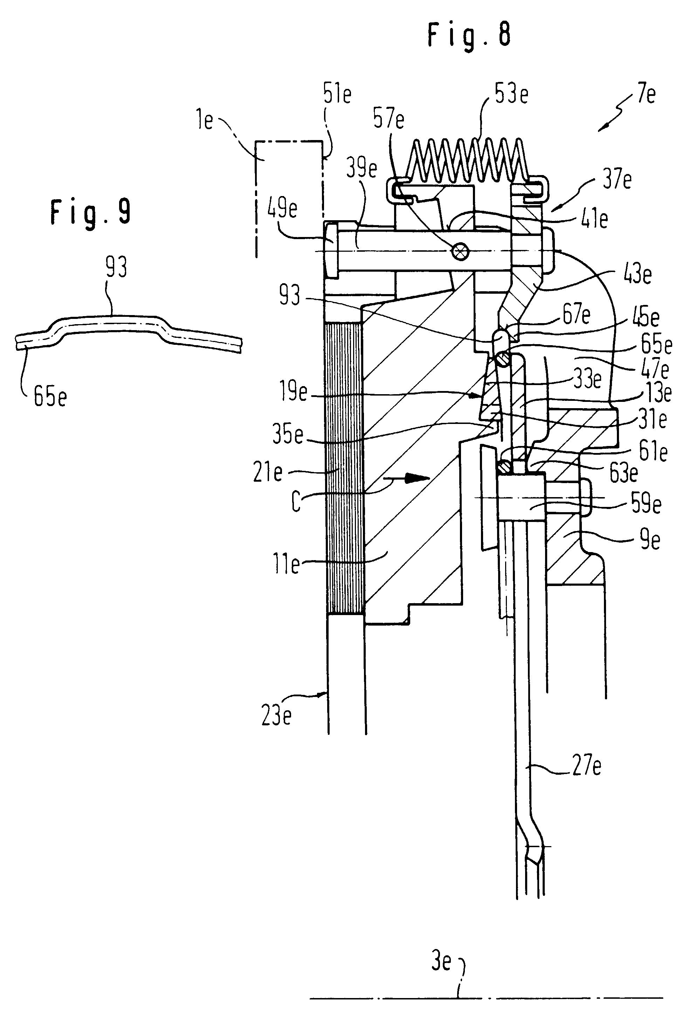

Die Fig. 8 und 9 zeigen eine Druckplatteneinheit 7e einer gedrückten Reibungskupplung, deren Spielgeber 37e Schiebebolzen 39e haben, die ähnlich der Ausführungsform aus Fig. 2 sich mit einem Kopf 49e am Schwungrad le abstützen und in Verbindung mit Zugfedern 53e ähnlich dem Ausführungsbeispiel aus Fig. 5 in Bohrungen 41e der Anpreßplatte 11e selbsthemmend arretiert werden können. Die Abstützung der Enden 45e der mit den Schiebebolzen 39e verbundenen Betätigungshebel 43e erfolgt ähnlich der Variante aus Fig. 6, wobei jedoch der den Außendurchmesser der Membranfeder 13e an der Nachstelleinrichtung 19e abstützende Auflagering 65e radial über den Außenumfang der Membranfeder 13e vorstehende Bereiche 93 hat (Fig. 9), auf welchen das Ende 45e der Betätigungshebel 43e radial außerhalb der Membranfeder aufliegt. Die Enden 45e sind mit Aussparungen 67e versehen, die entsprechend der Variante aus Fig. 2 bzw. 3 zum einen eine Verdrehsicherung für den Spielgeber 37e bilden und zum anderen durch schräg verlaufende Auflageflächen die Selbsthemmung der Spielgeber 37e unterstützen, wie dies anhand von Fig. 3 erläutert wurde. Auch bei der Variante der Fig. 8 und 9 ist der Anpreßplatte 11e eine Lüftkraft erzeugende Einrichtung zugeordnet.

## Patentansprüche (Patentansprüche für folgende(n) Vertragsstaat(en): DE, FR, GB, SE)

1. Druckplattenanordnung für eine Kraftfahrzeug-Reibungskupplung, umfassend
- ein an einem Schwungrad (1), welches um eine Drehachse (3) drehbar ist, befestigbares Kupplungsgehäuse (9),
- eine in dem Kupplungsgehäuse (9) relativ zu diesem drehfest, aber axial verlagerbar angeordnete, über Reibbeläge (21) einer Kupplungsscheibe (23) an dem Schwungrad (1) abstützbare Anpreßplatte (11),
- eine mit Vorspannung zwischen einer Auflage des Kupplungsgelhäuses (9) und einer Auflage der Anpreßplatte (11) abgestützte Membranfeder (13) und
- eine im Abstützweg der Membranfeder (13) zwischen der Membranfeder (13) und der Anpreßplatte (11) angeordnete Nachstelleinrichtung (19), die wenigstens ein bewegliches, bei Verschleiß der Reibbeläge (21) der Kupplungsscheibe (23) und ausgekuppelter Reibungskupplung eine axiale Verlagerung der Anpreßplatte (11) weg von der Membranfeder (13) bewirkendes Verschleißweg-Ausgleichsorgan (31) aufweist,
wobei an der Anpreßplatte (11) in Umfangsrichtung verteilt mehrere Spielgeber (37) zumindest angenähert axial beweglich geführt, jedoch durch Reibung an der Anpreßplatte (11) arretierbar sind und an einer mit dem Kupplungsgehäuse (9) betriebsmäßig verbundenen Komponente erste, die Bewegung der Spielgeber (37) zum Schwungrad (1) hin begrenzende Anschläge (51) vorgesehen sind, und wobei die Spielgeber (37) zweite Anschläge (45) aufweisen,
**dadurch gekennzeichnet,**
daß die zweiten Anschläge (45) und die Anpreßplatte (11) Zusammen eine Nachstellweg begrenzungseinrichtung für das Verschleißweg-Ausgleichsorgan (31) bilden und daß die Spielgeber (37) in zumindest angenähert parallel zur Drehachse (3) verlaufenden Öffnungen (41) der Anpreßplatte (11) geführt und in den Öffnungen (41) zur Arretierung selbsthemmend verkantbar sind.

2. Anordnung nach Anspruch 1, dadurch gekennzeichnet, daß Federmittel (53) die Spielgeber (37) in deren selbsthemmend verkantete Stellung vorspannen, derart, daß die Anpreßplatte (11) die Spielgeber (37) bei einer Lüftbewegung der Anpreßplatte (11) mitnimmt.

3. Anordnung nach Anspruch 1 oder 2, dadurch gekennzeichnet, daß der zweite Anschlag (45; 45a, b) auf der Membranfeder (13; 13a, b) direkt aufliegt und daß der zweite Anschlag (45; 45a, b) und die Membranfeder (13; 13a, b) so geformt sind, daß beim Ausrücken der Reibungskupplung eine die Selbsthemmung des Spielgebers (37; 37a, b) in der Öffnung (41; 41a, b) der Anpreßplatte (11; 11a, b) unterstützende Kraftkomponente entsteht.

4. Anordnung nach Anspruch 3, dadurch gekennzeichnet, daß die gegenseitigen Auflageflächen des zweiten Anschlags (45a) und der Membranfeder (13a), bezogen auf eine achsnormale Ebene, einen Neigungswinkel (α) haben, der so gewählt ist, daß die Auflagekraft eine den Selbsthemmeffkt unterstützende Kraftkomponente entlang der Auflagefläche hat, die größer als die zwischen den Auflageflächen wirkenden Reibkraft ist.

5. Anordnung nach einem der Ansprüche 1 bis 4, dadurch gekennzeichnet, daß Zusätzlich jeder Spielgeber (37d) reibschlüssig arretiert an der Anpreßplatte (11d) in Richtung der Drehachse (3d) verschiebbar geführt ist.

6. Anordnung nach Anspruch 5, dadurch gekennzeichnet, daß jeder Spielgeber (37d) einen als federnde Spannhülse ausgebildeten Schiebebolzen (39d) umfaßt, der in einer zumindest angenähert parallel zur Drehachse (3d) verlaufende Öffnung (41d) der Anpreßplatte (11d) gegen eine von der Spannhülse erzeugte Reibkraft verschiebbar geführt ist.

7. Anordnung nach einem der Ansprüche 1 bis 6, dadurch gekennzeichnet, daß jeder Spielgeber (37) einen in einer Öffnung (41) der Anpreßplatte (11) geführten Schiebebolzen (39) und einen an diesem befestigten, den zweiten Anschlag (45) bildenden Hebel (43) auf der von der Kupplungsscheibe (23) abgewandten Seite der Anpreßplatte (11) aufweist.

8. Anordnung nach Anspruch 7, dadurch gekennzeichnet, daß der Hebel (43c-e) unabhängig von der Membranfeder (13c-e) an dem Verschleißweg-Ausgleichsorgan (31c-e) abgestützt ist und daß der Anpreßplatte (11c-e) eine die Anpreßplatte (11c-e) in Lüftrichtung spannende Lüfteinrichtung zugeordnet ist.

9. Anordnung nach Anspruch 7, dadurch gekennzeichnet, daß der Hebel (43; 43a, b) auf der Membranfeder (13; 13a, b) aufliegt.

10. Anordnung nach Anspruch 8 oder 9, dadurch gekennzeichnet, daß die Nachstelleinrichtung (19a, b, d, e) zwischen dem Bereich des Außenumfangs der Membranfeder (13a, b, d, e) und der Anpreßplatte (11a, b, d, e) abgestützt ist.

11. Anordnung nach Anspruch 8 oder 9, dadurch gekennzeichnet, daß die Nachstelleinrichtung (19; 19c) zwischen einem Durchmesserbereich der Membranfeder (13; 13c) kleiner als deren Außendurchmesser und der Anpreßplatte (11; 11c) abgestützt ist.

12. Anordnung nach Anspruch 11, dadurch gekennzeichnet, daß die Hebel (43; 43c) auf der Außenseite des Kupplungsgehäuses (9; 9c) angeordnet sind und durch Öffnungen (47; 47c) des Kupplungsgehäuses (9; 9c) bis an die Membranfeder (13) heranreichen oder durch Öffnungen (81) der Membranfeder (13c) bis an einen an der Membranfeder (13c) anliegenden Auflagering (17c) heranreichen.

13. Anordnung nach einem der Ansprüche 7 bis 12, dadurch gekennzeichnet, daß jeder Spielgeber (37a, d, e) bezogen auf seinen Schwenkpunkt in der Öffnung (41a, d, e) der Anpreßplatte (11a, d, e) im wesentlichen fliehkraftentlastet ist.

14. Anordnung nach einem der Ansprüche 7 bis 13, dadurch gekennzeichnet, daß jeder Spielgeber (37) bezogen auf die Öffnung (41) der Anpreßplatte (11) gegen Verdrehen gesichert fixiert ist.

15. Anordnung nach Anspruch 14, dadurch gekennzeichnet, daß auf der zur Drehachse benachbarten Seite der Öffnunp (41b) ein Führungsstift insbesondere in Form einer radial federnden Spannhülse (75) parallel zur Achse der Öffnung (41b) von der Anpreßplatte (11b) absteht und in eine Bohrung (77) des Hebels (43b) des Spielgebers (37b) eingreift.

16. Anordnung nach Anspruch 14, dadurch gekennzeichnet, daß die Kontur des von dem Hebel (43a, d, e) jedes Spielgebers (37a, d, e) gebildeten Anschlags (45a, d, e) so gewählt ist, daß der Spielgeber (37a, d, e) relativ zur Membranfeder (13a) oder einem ihrer Auflageringe (61d, e) oder der Anpreßplatte drehfest fixiert ist.

17. Anordnung nach Anspruch 14, dadurch gekennzeichnet, daß der Hebel (43; 43b, c) jedes Spielgebers (37; 37b, c) in eine Öffnung (47; 47b, c) des Kupplungsgehäuses (9; 9b, c) hineinreicht und den Spielgeber (37; 37b, c) relativ zum Kupplungsgehäuse (9; 9b, c) drehfest fixiert.

18. Anordnung nach einem der Ansprüche 1 bis 17, dadurch gekennzeichnet, daß zwischen jedem Spielgeber (37; 37a-c, e) und der Anpreßplatte (11; 11a-c, e) eine Feder (53; 53a-c, e) angeordnet ist, die den zweiten Anschlag (45; 45a-c, e) auf die Anpreßplatte (11; 11a-c, e) zu vorspannt.

19. Anordnung nach Anspruch 18, dadurch gekennzeichnet, daß jeder Spielgeber (37; 37a, b, e) einen in einer Öffnung (41; 41a, b, e) der Anpreßplatte (11; 11a, b, e) verschiebbar geführten Schiebebolzen (39; 39a, b, e) aufweist, der an seinem dem Schwungrad (1; 1a, b, e) zugewandten Ende einen Bund (49; 49a, b, e) aufweist und daß die Feder (53; 53a, b, e) zwischen dem Bund (49; 49a, b, e) und der Anpreßplatte (11; 11a, b, e) abgestützt ist.

20. Anordnung nach Anspruch 19, dadurch gekennzeichnet, daß die Feder als Kegelfeder (53; 53a, b) ausgebildet ist, den Schiebebolzen (39; 39a, b) umschließt, mit ihrem durchmesserkleineren Ende an dem Bund (49; 49a, b) abgestützt ist und zur Erzeugung eines auf den Schiebebolzen (39; 39a, b) wirkenden Splelausgleichsmoments mit ihrem durchmessergrößeren Ende bezogen auf den Schiebebolzen (39; 39a, b) nach radial außen versetzt an der Anpreßplatte (11; 11a, b) abgestützt ist.

21. Anordnung nach Anspruch 20, dadurch gekennzeichnet, daß die Anpreßplatte (11; 11a, b) zur Führung des durchmessergrößeren Endes der Kegelfeder (53; 53a, b) ein zu der den Schiebebolzen (39; 39a, b) führenden Öffnung (41; 41a, b) exzentrisches Sackloch (55; 55a, b) aufweist.

22. Anordnung nach Anspruch 18, dadurch gekennzeichnet, daß jeder Spielgeber (37c, e) einen in einer Öffnung (41c, e) der Anpreßplatte (11c, e) verschiebbar geführten Schiebebolzen (39c, e) aufweist und daß die Feder als Zugfeder (53c, e) ausgebildet unc zur Erzeugung eines Spielausgleichsmoments bezogen auf den Schiebebolzen (39c, e) nach radial außen versetzt an der Anpreßplatte (11c, e) und einem am schwungradfernen Ende des Schiebebolzens (39c, e) befestigten Teil (43c, e) eingehängt ist.

23. Anordnung nach einem der Ansprüche 18 bis 22, dadurch gekennzeichnet, daß jeder Schiebebolzen (37; 37a-c, e) einen in einer Öffnung (41; 41a-c, e) der Anpreßplatte (11; 11a-c, e) verschiebbar geführten Schiebebolzen (39; 39a-c, e) aufweist und daß der Schiebebolzen (39; 39a-c, e) und/oder die Öffnung (41; 41a-c, e) reibkzafterhöhende Mittel umfassen.

24. Anordnung nach einem der Ansprüche 1 bis 23, dadurch gekennzeichnet, daß das Verschleißweg-Ausgleichsorgan einen zur Drehachse (3) konzentrischen, radial geschlitzten, nach radial außen sich verjüngenden Konusring (31) umfaßt, der mit radialer, in Richtung einer Durchmesseränderung, insbesondere einer Durchmesservergrößerung, wirkender Eigenspannung an einer der Membranfeder (13) zugewandten Führungsfläche (33) der Anpreßplatte (11), insbesondere einer konusförmigen Schrägfläche, geführt ist.

25. Anordnung nach Anspruch 24, dadurch gekennzeichnet, daß zwischen dem Konusring (31a) und der Membranfeder (13a) ein Auflagering (67) angeordnet ist, der mit mehreren in Umfangsrichtung gegeneinander versetzten, zur Drehachse (3) parallelen Zentrierstiften (69) an der Anpreßplatte (11a) zentriert ist.

26. Druckplattenanordnung nach einem der Ansprüche 1 bis 25, dadurch gekennzeichnet, daß das Verschleißweg-Ausgleichsorgan (31) der Nachstelleinrichtung (19) stufenlos verstellbar ist und daß zur Betätigung der Reibungskupplung eine hydraulische Kupplungsbetätigungseinrichtung vorgesehen ist.

27. Kupplungsanordnung für ein Kraftfahrzeug, umfassend:
- eine hydraulisch betätigte Reibungskupplung, deren Druckplattenanordnung aufweist:
a) ein an eine Schwungrad (1), welches um eine Drehachse (3) drehbar ist, befestigbares Kupplungsgehäuse (9),
b) eine in dem Kupplungsgehäuse (9) relativ zu diesem drehfest, aber axial verlagerbar angeordnete, über Reibbeläge einer Kupplungsscheibe (23) an dem Schwungrad (1) abstützbare Ampreßplatte (11) und
c) eine mit Vorspannung zwischen einer Auflage des Kupplungsgehäuses (9) und einer Auflage der Anpreßplatte (11) abgestützten Membranfeder (13)
d) eine im Abstützweg der Membranfeder (13) zwischen der Membranfeder (13) und der Anpreßplatte (11) angeordnete Nachstelleinrichtung (19), die wenigstens ein bewegliches, bei Verschleiß der Reibbeläge (21) der Kupplungsscheibe (23) und ausgekuppelter Reibungskupplung eine stufenlose axiale Verlagerung der Anpreßplatte (11) weg von der Membranfeder (13) bewirkandes Verschleißweg-Ausgleichsorgan (31) und
e) eine an der Anpreßplatte (11) zumindest angenähert axial beweglich geführte, jedoch durch Reibung an der Anpreßplatte (11) arretierbare Spielgeberanordnung (37), die während des Einkuppelvorgangs zur Begrenzung ihrer zum Schwungrad (1) in gerichteten Bewegung an einer mit dem Kupplungsgehäuse (9) betriebsmäßig fest verbundenen Komponente (1; 9c) anschlägt und Zusammen mit der Anpreßplatte (11) eine während des Auskuppelvorgangs wirksame Nachstellweg begrenzungseinrichtung für das Verschleißweg-Ausgleichsorgan (31) bildet.

28. Kupplungsanordnung nach Anspruch 27, wobei die Druckplattenanordnung gemäß einem der Ansprüche 1 bis 26 ausgebildet ist.

## Patentansprüche (Patentansprüche für folgende(n) Vertragsstaat(en): ES)

1. Druckplattenanordnung für eine Kraftfahrzeug-ReibungsKupplung, umfassend
- ein an einem Schwungrad (1), welches um eine Drehachse (3) drehbar ist, befestigbares Kupplungsgehäuse (9),
- eine in dem Kupplungsgehäuse (9) relativ zu diesem drehfest, aber axial verlagerbar angeordnete, über Reibbeläge (21) eine Kupplungsscheibe (23) an dem Schwungrad (1) abstützbare Anpreßplatte (11),
- eine mit Vorspannung zwischen einer Auflage des Kupplungsgehäuses (9) und einer Auflage der Anpreßplatte (11) abgestützte Membranfeder (13) und
- eine im Abstützweg der Membranfeder (13) zwischen der Membranfeder (13) und der Anpreßplatte (11) angeordnete Nachstelleinrichtung (19), die wenigstens ein bewegliches, bei Verschleiß der Reibbeläge (21) der Kupplungsscheibe (23) und ausgekuppelter Reibungskupplung eine axiale Verlagerung der Anpreßplatte (11) weg von der Membranfeder (13) bewirkendes Verchleißweg-Ausgleichsorgan (31) aufweist,
wobei an der Anpreßplatte (11) in Umfangsrichtung verteilt mehrere Spielgeber (37) zumindest angenähert axial beweglich geführt, jedoch durch Reibung an der Anpreßplatte (11) arretierbar sind und an einer mit dem Kupplungsgehäuse (9) betriebsmäßig verbundenen Komponente erste, die Bewegung der Spielgeber (37) zum Schwungrad (1) hin begrenzende Anschläge (51) vorgesehen sind, und wobei die Spielgeber (37) zweite Anschläge (45) aufweisen,
**dadurch gekennzeichnet,**
daß die zweiten Anschläge (45) und die Anpreßplatte (11) Zusammen eine Nachstellweg begrenzungseinrichtung für das Verschleißweg-Ausgleichsorgan (31) bilden.

2. Anordnung nach Anspruch 1, dadurch gekennzeichnet, daß die Spielgeber (37) in zumindest angenähert parallel zur Drehachse (3) verlaufenden Öffnungen (41) der Anpreßplatte (11) geführt und in den Öffnungen (41) zur Arretierung selbsthemmend verkantbar sind.

3. Anordnung nach Anspruch 2, dadurch gekennzeichnet, daß Federmittel (53) die Spielgeber (37) in deren selbsthemmend verkantete Stellung vorspannen, derart, daß die Anpreßplatte (11) die spielgeber (37) bei einer Lüftbewegung der Anpreßplatte (11) mitnimmt.

4. Anordnung nach Anspruch 2 oder 3, dadurch gekennzeichnet, daß der zweite Anschlag (45; 45a, b) auf der Membranfeder (13; 13a, b) direkt aufliegt und daß der zweite Anschlag (45; 45a, b) und die Membranfeder (13; 13a, b) so geformt sind, daß beim Ausrücken der Reibungskupplung eine die Selbsthemmung des Spielgebers (37; 37a, b) in der Öffnung (41; 41a, b) der Anpreßplatte (11; 11a, b) unterstützende Kraftkomponente entsteht.

5. Anordnung nach Anspruch 4, dadurch gekennzeichnet, daß die gegenseitigen Auflageflächen des zweiten Anschlags (45a) und der Membranfeder (13a), bezogen auf eine achsnormale Ebene, einen Neigungswinkel (α) haben, der so gewählt ist, daß die Auflagekraft eine den Selbsthemmeffekt unterstützende Kraftkomponente entlang der Auflagefläche hat, die größer als die zwischen den Auflageflächen wirkenden Reibkraft ist.

6. Anordnung nach einem der Ansprüche 1 bis 5, dadurch gekennzeichnet, daß jeder Spielgeber (37d) reibschlüssig arretiert an der Anpreßplatte (11d) in Richtung der Drehachse (3d) verschiebbar geführt ist.

7. Anordnung nach Anspruch 6, dadurch gekennzeichnet, daß jeder Spielgeber (37d) einen als federnde Spannhülse ausgebildeten Schiebebolzen (39d) umfaßt, der in einer zumindest angenähert parallel zur Drehachse (3d) verlaufende Öffnung (41d) der Anpreßplatte (11d) gegen eine von der Spannhülse erzeugte Reibkraft verschiebbar geführt ist.

8. Anordnung nach einem der Ansprüche 1 bis 7, dadurch gekennzeichnet, daß jeder Spielgeber (37) einen in einer Öffnung (41) der Anpreßplatte (11) geführten Schiebebolzen (39) und einen an diesem befestigten, den zweiten Anschlag (45) bildenden Hebel (43) auf der von der Kupplungsscheibe (23) abgewandten Seite der Anpreßplatte (11) aufweist.

9. Anordnung nach Anspruch 8, dadurch gekennzeichnet, daß der Hebel (43c-e) unabhängig von der Membranfeder (13c-e) an dem Verschleißweg-Ausgleichsorgan (31c-e) abgestützt ist und daß der Anpreßplatte (11c-e) eine die Anpreßplatte (11c-e) in Lüftrichtung spannende Lüfteinrichtung zugeordnet ist.

10. Anordnung nach Anspruch 8, dadurch gekennzeichnet, daß der Hebel (43; 43a, b) auf der Membranfeder (13; 13a, b) aufliegt.

11. Anordnung nach Anspruch 9 oder 10, dadurch gekennzeichnet, daß die Nachstelleinrichtung (19a, b, d, e) zwischen dem Bereich des Außenumfangs der Membranfeder (13a, b, d, e) und der Anpreßplatte (11a, b, d, e) abgestützt ist.

12. Anordnung nach Anspruch 9 oder 10, dadurch gekennzeichnet, das die Nachstelleinrichtung (19; 19c) zwischen einem Durchmesserbereich der Membranfeder (13; 13c) kleiner als deren Außendurchmesser und der Anpreßplatte (11; 11c) abgestützt ist.

13. Anordnung nach Anspruch 12, dadurch gekennzeichnet, daß die Hebel (43; 43c) auf der Außenseite des Kupplungsgehäuses (9; 9c) angeordnet sind und durch Öffnungen (47; 47c) des Kupplungsgehäuses (9; 9c) bis an die Membranfeder (13) heranreichen oder durch Öffnungen (81) der Membranfeder (13c) bis an einen an der Membranfeder (13c) anliegenden Auflagering (17c) heranreichen.

14. Anordnung nach einem der Ansprüche 8 bis 13, dadurch gekennzeichnet, daß jeder Spielgeber (37a, d, e) bezogen auf seinen Schwenkpunkt in der Öffnung (41a, d, e) der Anpreßplatte (11a, d, e) im wesentlichen fliehkraftentlastet ist.

15. Anordnung nach einem der Ansprüche 8 bis 14, dadurch gekennzeichnet, daß jeder Spielgeber (37) bezogen auf die Öffnung (41) der Anpreßplatte (11) gegen Verdrehen gesichert fixiert ist.

16. Anordnung nach Anspruch 15, dadurch gekennzeichnet, daß auf der zur Drehachse benachbarten Seite der Öffnung (41b) ein Führungsstift insbesondere in Form einer radial federnden Spannhülse (75) parallel zur Achse der Öffnung (41b) von der Anpreßplatte (11b) absteht und in eine Bohrung (77) des Hebels (43b) des Spielgebers (37b) eingreift.

17. Anordnung nach Anspruch 15, dadurch gekennzeichnet, daß die Kontur des von dem Hebel (43a, d, e) jedes Spielgebers (37a, c, e) gebildeten Anschlags (45a, d, e) so gewählt ist, daß der Spielgeber (37a, d, e) relativ zur Membranfeder (13a) oder einem ihrer Auflageringe (61d, e) oder der Anpreßplatte drehfest fixiert ist.

18. Anordnung nach Anspruch 15, dadurch gekennzeichnet, daß der Hebel (43; 43b, c) jedes Spielgebers (37; 37b, c) in eine Öffnung; (47; 47b, c) des Kupplungsgehäuses (9; 9b, c) hineinreicht und den Spielgeber (37; 37b, c) relativ zum Kupplungsgehäuse (9; 9b, c) drehfest fixiert.

19. Anordnung nach einem der Ansprüche 1 bis 18, dadurch gekennzeichnet, daß zwischen jedem Spielgeber (37; 37a-c, e) und der Anpreßplatte (11; 11a-c, e) eine Feder (53; 53a-c, e) angeordnet ist, die den zweiten Anschlag (45; 45a-c, e) auf die Anpreßplatte (11; 11a-c, e) zu vorspannt.

20. Anordnung nach Anspruch 19, dadurch gekennzeichnet, daß jeder Spielgeber (37; 37a, b, e) einen in einer Öffnung (41; 41a, b, e) der Anpreßplatte (11; 11a, b, e) verschiebbar geführten Schiebebolzen (39; 39a, b, e) aufweist, der an seinem dem Schwungrad (1; 1a, b, e) zugewandten Ende einen Bund (49; 49a, b, e) aufweist und daß die Feder (53; 53a, b, e) zwischen dem Bund (49; 49a, b, e) und der Anpreßplatte (11, 11a, b, e) abgestützt ist.

21. Anordnung nach Anspruch 20, dadurch gekennzeichnet, daß die Feder als Kegelfeder (53; 53a, b) ausgebildet ist, den Schiebebolzen (39; 39a, b) umschließt, mit ihrem durchmesserkleineren Ende an dem Bund (49; 49a, b) abgestützt ist und zur Erzeugung eines auf den Schiebebolzen (39; 39a, b) wirkenden Spielausgleichsmoments mit ihrem durchmessergrößeren Ende bezogen auf den Schiebebolzen (39; 39a, b) nach radial außen versetzt an der Anpreßplatte (11; 11a, b) abgestützt ist.

22. Anordnung nach Anspruch 21, dadurch gekennzeichnet, daß die Anpreßplatte (11; 11a, b) zur Führung des durchmessergrößeren Endes der Kegelfeder (53; 53a, b) ein zu der den Schiebebolzen (39; 39a, b) führenden Öffnung (41; 41a, b) exzentrisches Sackloch (55; 55a, b) aufweist.

23. Anordnung nach Anspruch 19, dadurch gekennzeichnet, daß jeder Spielgeber (37c, e) einen in einer Öffnung (41c, e) der Anpreßplatte (11c, e) verschiebbar geführten Schiebebolzen (39c, e) aufweist und daß die Feder als Zugfeder (53c, e) ausgebildet und zur Erzeugung eines Spielausgleichsmoments bezogen auf den Schiebebolzen (39c, e) nach radial außen versetzt an der Anpreßplatte (11c, e) und einem am schwungradfernen Ende des Schiebebolzens (39c, e) befestigten Teil (43c, e) eingehängt ist.

24. Anordnung nach einem der Ansprüche 19 bis 23, dadurch gekennzeichnet, daß jeder Schiebebolzen (37; 37a-c, e) einen in einer Öffnung (41; 41a-c, e) der Anpreßplatte (11; 11a-c, e) verschiebbar geführten Schiebebolzen (39; 39a-c, e) aufweist und daß der Schiebebolzen (39; 39a-c, e) und/oder die Öffnung (41; 41a-c, e) reibkrafterhöhende Mittel umfassen.

25. Anordnung nach einem der Ansprüche 1 bis 24, dadurch gekennzeichnet, daß das Verschleißweg-Ausgleichsorgan einen zur Drehachse (3) konzentrischen, radial geschlitzten, nach radial außen sich verjüngenden Konusring (31) umfaßt, der mit radialer, in Richtung einer Durchmesseränderung, insbesondere einer Durchmesservergrößerung, wirkender Eigenspannung an einer der Membranfeder (13) zugewandten Führungsfläche (33) der Anpreßplatte (11), insbesondere einer konusförmigen Schrägfläche, geführt ist.

26. Anordnung nach Anspruch 25, dadurch gekennzeichnet, daß zwischen dem Konusring (31a) und der Membranfeder (13a) ein Auflagering (67) angeordnet ist, der mit mehreren in Umfangsrichtung gegeneinander versetzten, zur Drehachse (3) parallelen Zentrierstiften (69) an der Anpreßplatte (11a) zentriert ist.

27. Druckplattenanordnung nach einem der Ansprüche 1 bis 26, dadurch gekennzeichnet, daß das Verschleißweg-Ausgleichsorgan (31) der Nachstelleinrichtung (19) stufenlos verstellbar ist und daß zur Betätigung der Reibungskupplung eine hydraulische Kupplungsbetätigungseinrichtung vorgesehen ist.

28. Kupplungsanordnung für ein Kraftfahrzeug, umfassend:
- eine hydraulisch betätigte Reibungskupplung, deren Druckplattenanordnung aufweist:
a) ein an einem Schwungrad (1), welches um eine Drehachse (3) drehbar ist, befestigbares Kupplungsgehäuse (9),
b) eine in dem Kupplungsgehäuse (9) relativ zu diesem drehfest, aber axial verlagerbar angeordnete, über Reibbeläge einer Kupplungsscheibe (23) an dem Schwungrad (1) abstützbare Anpreßplatte (11) und
c) eine mit Vorspannung zwischen einer Auflage des Kupplungsgehäuses (9) und einer Auflage der Anpreßplatte (11) abgestützten Membranfeder (13),
d) eine im Abstützweg der Membranfeder (13) zwischen der Membranfeder (13) und der Anpreßplatte (11) angeordnete Nachstelleinrichtung (19), die wenigstens ein bewegliches, bei Verschleiß der Reibbeläge (21) der Kupplungsscheibe (23) und ausgekuppelter Reibungskupplung eine stufenlose axiale Verlagerung der Anpreßplatte (11) weg von der Membranfeder (13) bewirkendes Verschleißweg-Ausgleichsorgan (31) und
e) eine an der Anpreßplatte (11) zumindest angenähert axial beweglich geführte, jedoch durch Reibung an der Anpreßplatte (11) arretierbare Spielgeberanordnung (37), die während des Einkuppelvorgangs zur Begrenzung ihrer zum Schwungrad (1) hin gerichteten Bewegung an einer mit dem Kupplungsgehäuse (9) betriebsmäßig fest verbundenen Komponente (1; 9c) anschlägt und Zusammen mit der Anpreßplatte (11) eine während des Auskuppelvorgangs wirksame Nachstellweg begrenzungseinrichtung für das Verschleißweg-Ausgleichsorgan (31) bildet.

29. Kupplungsanordnung nach Anspruch 28, wobei die Druckplattenanordnung gemäß einem der Ansprüche 1 bis 26 ausgebildet ist.

## Claims (Claims for the following Contracting State(s): DE, FR, GB, SE)

1. Pressure plate arrangement for a friction clutch of a motor vehicle, comprising
- a clutch housing (9), which can be fastened to a flywheel (1) and is rotatable around an axis of rotation (3),
- a pressure plate (11), which is disposed in the clutch housing (9) and is fixed against relative rotation with this, while being axially displaceable, can be supported on the flywheel (1) via friction linings (21) of a clutch disc (23),
- a diaphragm spring (13) supported under prestress between a shoulder of the clutch housing (9) and a shoulder of the pressure plate (11), and
- an adjustment device (19) disposed in the path of the support of the diaphragm spring (13) between the diaphragm spring (13) and the pressure plate (11), which has at least one movable wear path compensation member (31), which causes an axial movement of the pressure plate (11) away from the diaphragm spring (13) when the friction linings (21) of the clutch disc (23) are worn and the friction clutch is disengaged,
wherein a plurality of play transfer devices (37) are distributed in the circumferential direction of the pressure plate (11) and are guided so as to be at least approximately axially movable, but arrestable on the pressure plate (11) by friction, and
first limit stops (51), which limit the movement of the play transfer devices (37) towards the flywheel (1), are provided on a component which is operationally connected with the clutch housing (9), and wherein
the play transfer devices (37) have second stops (45), characterised in that the second stops (45) and the pressure plate (11) together form an adjustment path restriction means for the wear path compensation member (31), and that the play transfer devices (37) are guided in openings (41) of the pressure plate (11) which extend at least approximately parallel to the axis of rotation (3) and can be self-lockingly canted in the openings (41) for arresting.

2. Arrangement according to Claim 1, characterised in that spring means (53) prestress the play transfer devices (37) in their self-lockingly canted position, so that the pressure plate (11) takes along the play transfer devices (37) during a lifting movement of the pressure plate (11).

3. Arrangement according to Claim 1 or 2, characterised in that the second stop (45; 45a, b) lies directly on the diaphragm spring (13; 13a, b), and that the second stop (45; 45a, b) and the diaphragm spring (13; 13a, 13b) are formed in such a way that, when the friction clutch is disengaged, a force component is generated which assists the self-locking of the play transfer devices (37; 37a, b) in the opening (41; 41a, b) of the pressure plate (11; 11a, b).

4. Arrangement according to Claim 3, characterised in that the mutual seating surfaces of the second stop (45a) and the diaphragm spring (13a) are selected so that they have an angle of inclination (α) in relation to an axis-normal plane which is selected such that the seating force has a force component along the seating surface, which assists the self-locking effect and which is greater than the frictional force acting between the seating surfaces.

5. Arrangement according to one of Claims 1 to 4, characterised in that, in addition, each play transfer device (37d) is arrested by frictional engagement on the pressure plate (11d) and is displaceably guided in the direction of the axis of rotation (3d).

6. Arrangement according to Claim 5, characterised in that each play transfer device (37d) comprises a sliding bolt (39d) in the form of a resilient clamping sleeve, which is guided against a frictional force generated by the clamping sleeve in an opening (41d) of the pressure plate (11d), which at least approximately extends parallel to the axis of rotation (3d).

7. Arrangement according to one of Claims 1 to 6, characterised in that on the side of the pressure plate (11) facing away from the clutch disc (23), each play transfer device (37) has a sliding bolt (39) guided in an opening (41) of the pressure plate (11) and a lever (43), forming the second stop (45), fastened thereon.

8. Arrangement according to Claim 7, characterised in that the lever (43c-e) is supported independently of the diaphragm spring (13c-e) on the wear path compensation member (31c-e), and that the pressure plate (11c-e), which prestresses the pressure plate (11c-e) in the direction of lift is assigned to the pressure plate (11c-e).

9. Arrangement according to Claim 7, characterised in that the lever (43; 43a, b) rests on the diaphragm spring (13; 13a, b).

10. Arrangement according to Claim 8 or 9 characterised in that the adjustment device (19a, b, d, e) is supported between the area of the exterior circumference of the diaphragm spring (13a, b, d, e) and the pressure plate (11a, b, d, e).

11. Arrangement according to Claim 8 or 9, characterised in that the adjustment device (19; 19c) is supported between an area of the diameter of the diaphragm spring (13; 13c), which is smaller than its outside diameter, and the pressure plate (11; 11c).

12. Arrangement according to Claim 7, characterised in that the levers (43; 43c) are disposed on the exterior of the clutch housing (9; 9c) and extend through openings (47; 47c) of the clutch housing (9; 9c) up to the diaphragm spring (13) or extend through openings (81) of the diaphragm spring (13c) as far as a support ring (17c) resting on the diaphragm spring (13c).

13. Arrangement according to one of Claims 7 to 12, characterised in that in relation to its pivot point in the opening (41a, d, e) of the pressure plate (11a, d, e), each play transfer device (37a, d, e) is essentially not subject to centrifugal force.

14. Arrangement according to one of Claims 7 to 13, characterised in that each play transfer device (37) is fixed securely against twisting in relation to the opening (41) of the pressure plate (11).

15. Arrangement according to Claim 14, characterised in that on the side of the opening (41b) next to the axis of rotation, a guide pin in particular in the shape of a radially resilient clamping sleeve (75) protrudes from the pressure plate (11b) parallel to the axis of the opening (41b) and engages into a bore (77) of the lever (43b) of the play transfer device (37b).

16. Arrangement according to Claim 14, characterised in that the shape of the stop (45a, d, e) formed by the lever (43a, d, e) of each play transfer device (37a, d, e) is selected in such a way that the play transfer device (37a, d, e) is fixed securely against rotation relative to the diaphragm spring (13a) or one of its support rings (61d, e) or the pressure plate.

17. Arrangement according to Claim 14, characterised in that the lever (43; 43b, c) of each play transfer device (37; 37b, c) extends into an opening (47; 47b, c) of the clutch housing (9; 9b, c) and fixes the play transfer device (37; 37b, c) securely against rotation in relation to the clutch housing (9; 9b, c).

18. Arrangement according to one of Claims 1 to 17, characterised in that a spring (53; 53a-c, e) is disposed between the play transfer device (37; 37a-c, e) and the pressure plate (11; 11a-c, e) which prestresses the second stop (45; 45a-c, e) towards the pressure plate (11; 11a-c, e).

19. Arrangement according to Claim 18, characterised in that each play transfer device (37; 37a, b, e) has a sliding bolt (39; 39a, b, e) guided displaceably in an opening (41; 41a, b, e) of the pressure plate (11; 11a, b, e), which has a collar (49; 49a, b, e) at its end facing the flywheel (1; 1a, b, e), and that the spring (53; 53a, b, e) is supported between the collar (49; 49a, b, e) and the pressure plate (11; 11a, b, e).

20. Arrangement according to Claim 19, characterised in that the spring is in the form of a conical spring (53; 53a, b), which encloses the sliding bolt (39; 39a, b), is supported with its end of smaller diameter against the collar (49; 49a, b) and, for generating a play compensation moment acting on the sliding bolt (39; 39a, b), is supported with its end of larger diameter in relation to the sliding bolt (39; 39a, b) radially offset towards the exterior on the pressure plate (11; 11a, b).

21. Arrangement according to Claim 20, characterised in that the pressure plate (11; 11a, b) has a blind bore (55; 55a, b), which is eccentric in relation to the opening (41; 41a, b) guiding the sliding bolt (39; 39a, b), for guiding the end of the conical spring (53; 53a, b) of larger diameter.

22. Arrangement according to Claim 18, characterised in that each play transfer device (37c, e) has a sliding bolt (39c, e) disposed in an opening (41c, e) of the pressure plate (11c, e), and that the spring can be embodied as a tension spring (53c, e) and, for generating a play compensation moment, can be suspended radially offset towards the exterior in relation to the sliding bolt (39c, e) on the pressure plate (11c, e) and on a part (43c, e) fastened on the end of the sliding bolt (39c, e) remote from the flywheel.

23. Arrangement according to one of Claims 18 to 22, characterised in that each play transfer device (37; 37a-c, e) has a sliding bolt (39; 39a-c, e), displaceably guided in an opening (41; 41a-c, e) of the pressure plate (11; 11a-c, e), and that the sliding bolt (39; 39a-c, e) and/or the opening (41; 41a-c, e) include frictional force-increasing means.

24. Arrangement according to one of Claims 1 to 23, characterised in that the wear path compensation member comprises a cone-shaped ring (31) which is concentric to the axis of rotation (3), is radially slit and radially tapers towards the outside and is guided so as to be radially movable with radial internal stress acting in the direction of a change in diameter, in particular an increase in diameter, on a guide surface (33) facing the diaphragm spring (13), in particular a cone-shaped inclined face of the pressure plate (11).

25. Arrangement according to Claim 24, characterised in that a support ring (67) is disposed between the cone-shaped ring (31a) and the diaphragm spring (13a) and is centred on the pressure plate (11a) by means of a plurality of centring pins (69) which are offset in relation to each other in the circumferential direction and are parallel to the axis of rotation (3).

26. Pressure plate arrangement according to one of Claims 1 to 25, characterised in that the wear path compensation member (31) of the adjustment device (19) is infinitely adjustable, and that a hydraulic clutch operating device is provided to operate the friction clutch.

27. Clutch arrangement for a motor vehicle comprising:
- a hydraulically operated friction clutch, the pressure plate arrangement of which has:
a) a clutch housing (9), which can be fastened to a flywheel (1) and is rotatable around an axis of rotation (3),
b) a pressure plate (11), which is disposed in the clutch housing (9) and is fixed against relative rotation with this, while being axially displaceable, can be supported on the flywheel (1) via friction linings of a clutch disc (23),
c) a diaphragm spring (13) supported under prestress between a shoulder of the clutch housing (9) and a shoulder of the pressure plate (11),
d) an adjustment device (19) disposed in the path of the support of the diaphragm spring (13) between the diaphragm spring (13) and the pressure plate (11), which has at least one movable wear path compensation member (31), which causes an axial movement of the pressure plate (11) away from the diaphragm spring (13) when the friction linings (21) of the clutch disc (23) are worn and the friction clutch is disengaged,
e) a play transfer device arrangement (37) guided so as to be at least approximately axially movable on the pressure plate (11), but arrestable on the pressure plate (11) by friction, said arrangement abutting against a component (1; 9c) firmly connected operationally to the clutch housing (9) during the engagement action to limit its movement directed towards the flywheel (1), and forming together with the pressure plate (11) an adjustment path restriction means active during the disengagement action for the wear path compensation member (31).

28. Clutch arrangement according to Claim 27, wherein the pressure plate arrangement is constructed in accordance with one of Claims 1 to 26.

## Claims (Claims for the following Contracting State(s): ES)

1. Pressure plate arrangement for a friction clutch of a motor vehicle, comprising
- a clutch housing (9), which can be fastened to a flywheel (1) and is rotatable around an axis of rotation (3),
- a pressure plate (11), which is disposed in the clutch housing (9) and is fixed against relative rotation with this, while being axially displaceable, can be supported on the flywheel (1) via friction linings (21) of a clutch disc (23),
- a diaphragm spring (13) supported under prestress between a shoulder of the clutch housing (9) and a shoulder of the pressure plate (11), and
- an adjustment device (19) disposed in the path of the support of the diaphragm spring (13) between the diaphragm spring (13) and the pressure plate (11), which has at least one movable wear path compensation member (31), which causes an axial movement of the pressure plate (11) away from the diaphragm spring (13) when the friction linings (21) of the clutch disc (23) are worn and the friction clutch is disengaged,
wherein a plurality of play transfer devices (37) are distributed in the circumferential direction of the pressure plate (11) and are guided so as to be at least approximately axially movable, but arrestable on the pressure plate (11) by friction, and
first limit stops (51), which limit the movement of the play transfer devices (37) towards the flywheel (1), are provided on a component which is operationally connected with the clutch housing (9), and wherein the play transfer devices (37) have second stops (45),
characterised in that the second stops (45) and the pressure plate (11) together form an adjustment path restriction means for the wear path compensation member (31).

2. Arrangement according to Claim 1, characterised in that the play transfer devices (37) are guided in openings (41) of the pressure plate (11) which extend at least approximately parallel to the axis of rotation (3) and can be self-lockingly canled in the openings (41) for arresting.

3. Arrangement according to Claim 2, characterised in that spring means (53) prestress the play transfer devices (37) in their self-lockingly canted position, so that the pressure plate (11) takes along the play transfer devices (37) during a lifting movement of the pressure plate (11).

4. Arrangement according to Claim 2 or 3, characterised in that the second stop (45; 45a, b) lies directly on the diaphragm spring (13; 13a, b), and that the second stop (45; 45a, b) and the diaphragm spring (13; 13a, 13b) are formed in such a way that, when the friction clutch is disengaged, a force component is generated which assists the self-locking of the play transfer devices (37; 37a, b) in the opening (41; 41a, b) of the pressure plate (11; 11a, b).

5. Arrangement according to Claim 4, characterised in that the mutual seating surfaces of the second stop (45a) and the diaphragm spring (13a) are selected so that they have an angle of inclination (α) in relation to an axis-normal plane which is selected such that the seating force has a force component along the seating surface, which assists the self-locking effect and which is greater than the frictional force acting between the seating surfaces.

6. Arrangement according to one of Claims 1 to 5, characterised in that, in addition, each play transfer device (37d) is arrested by frictional engagement on the pressure plate (11d) and in displaceably guided in the direction of the axis of rotation (3d).

7. Arrangement according to Claim 6, characterised in that each play transfer device (37d) comprises a sliding bolt (39d) in the form of a resilient clamping sleeve, which is guided against a frictional force generated by the clamping sleeve in an opening (41d) of the pressure plate (11d), which at least approximately extends parallel to the axis of rotation (3d).

8. Arrangement according to one of Claims 1 to 7, characterised in that on the side of the pressure plate (11) facing away from the clutch disc (23), each play transfer device (37) has a sliding bolt (39) guided in an opening (41) of the pressure plate (11) and a lever (43), forming the second stop (45), fastened thereon.

9. Arrangement according to Claim 8, characterised in that the lever (43c-e) is supported independently of the diaphragm spring (13c-e) on the wear path compensation member (31c-e), and that a lifting device, which prestresses the pressure plate (11c-e) in the direction of lift is assigned to the pressure plate (11c-e).

10. Arrangement according to Claim 8, characterised in that the lever (43; 43a, b) rests on the diaphragm spring (13; 13a, b).

11. Arrangement according to Claim 9 or 10, characterised in that the adjustment device (19a, b, d, e) is supported between the area of the exterior circumference of the diaphragm spring (13a, b, d, e) and the pressure plate (11a, b, d, e).

12. Arrangement according to Claim 9 or 10, characterised in that the adjustment device (19; 19c) is supported between an area of the diameter of the diaphragm spring (13; 13c), which is smaller than its outside diameter, and the pressure plate (11; 11c).

13. Arrangement according to Claim 12, characterised in that the levers (43; 43c) are disposed on the exterior of the clutch housing (9; 9c) and extend through openings (47; 47c) of the clutch housing (9; 9c) up to the diaphragm spring (13) or extend through openings (81) of the diaphragm spring (13c) as far as a support ring (17c) resting on the diaphragm spring (13c).

14. Arrangement according to one of Claims 8 to 13, characterised in that in relation to its pivot point in the opening (41a, d, e) of the pressure plate (11a, d, e), each play transfer device (37a, d, e) is essentially not subject to centrifugal force.

15. Arrangement according to one of Claims 8, to 14, characterised in that each play transfer device (37) is fixed securely against twisting in relation to the opening (41) of the pressure plate (11).

16. Arrangement according to Claim 15, characterised in that on the side of the opening (41b) next to the axis of rotation, a guide pin in particular in the shape of a radially resilient clamping sleeve (75) protrudes from the pressure plate (11b) parallel to the axis of the opening (41b) and engages into a bore (77) of the lever (43b) of the play transfer device (37b).

17. Arrangement according to Claim 15, characterised in that the shape of the stop (45a, d, e) formed by the lever (43a, d, e) of each play transfer device (37a, d, e) is selected in such a way that the play transfer device (37a, d, e) is fixed securely against rotation relative to the diaphragm spring (13a) or one of its support rings (61d, e) or the pressure plate.

18. Arrangement according to Claim 15, characterised in that the lever (43; 43b, c) of each play transfer device (37; 37b, c) extends into an opening (47; 47b, c) of the clutch housing (9; 9b, c) and fixes the play transfer device (37; 37b, c) securely against rotation in relation to the clutch housing (9; 9b, c).

19. Arrangement according to one of Claims 1 to 18, characterised in that a spring (53; 53a-c, e) is disposed between the play transfer device (37; 37a-c, e) and the pressure plate (11; 11a-c, e) which prestresses the second stop (45; 45a-c, e) towards the pressure plate (11; 11a-c, e).

20. Arrangement according to Claim 19, characterised in that each play transfer device (37; 37a, b, e) has a sliding bolt (39; 39a, b, e) guided displaceably in an opening (41; 41a, b, e) of the pressure plate (11; 11a, b, e), which has a collar (49; 49a, b, e) at its end facing the flywheel (1; 1a, b, e), and that the spring (53; 53a, b, e) is supported between the collar (49; 49a, b, e) and the pressure plate (11; 11a, b, e).

21. Arrangement according to Claim 20, characterised in that the spring is in the form of a conical spring (53; 53a, b), which encloses the sliding bolt (39; 39a, b), is supported with its end of smaller diameter against the collar (49; 49a, b) and, for generating a play compensation moment acting on the sliding bolt (39; 39a, b), is supported with its end of larger diameter in relation to the sliding bolt (39; 39a, b) radially offset towards the exterior on the pressure plate (11; 11a, b).

22. Arrangement according to Claim 21, characterised in that the pressure plate (11; 11a, b) has a blind bore (55; 55a, b), which is eccentric in relation to the opening (41; 41a, b) guiding the sliding bolt (39; 39a, b), for guiding the end of the conical spring (53; 53a, b) of larger diameter.

23. Arrangement according to Claim 19, characterised in that each play transfer device (37c, e) has a sliding bolt (39c, e) disposed in an opening (41c, e) of the pressure plate (11c, e), and that the spring can be embodied as a tension spring (53c, e) and, for generating a play compensation moment, can be suspended radially offset towards the exterior in relation to the sliding bolt (39c, e) on the pressure plate (11c, e) and on a part (43c, e) fastened on the end of the sliding bolt (39c, e) remote from the flywheel.

24. Arrangement according to one of Claims 19 to 23, characterised in that each play transfer device (37; 37a-c, e) has a sliding bolt (39; 39a-c, e), displaceably guided in an opening (41; 41a-c, e) of the pressure plate (11; 11a-c, e), and that the sliding bolt (39; 39a-c, e) and/or the opening (41; 41a-c, e) include frictional force-increasing means.

25. Arrangement according to one of Claims 1 to 24, characterised in that the wear path compensation member comprises a cone-shaped ring (31) which is concentric to the axis of rotation (3), is radially slit and radially tapers towards the outside and is guided so as to be radially movable with radial internal stress acting in the direction of a change in diameter, in particular an increase in diameter, on a guide surface (33) facing the diaphragm spring (13), in particular a cone-shaped inclined face of the pressure plate (11).

26. Arrangement according to Claim 25, characterised in that a support ring (67) is disposed between the cone-shaped ring (31a) and the diaphragm spring (13a) and is centred on the pressure plate (11a) by means of a plurality of centring pins (69) which are offset in relation to each other in the circumferential direction and are parallel to the axis of rotation (3).

27. Pressure plate arrangement according to one of Claims 1 to 26, characterised in that the wear path compensation member (31) of the adjustment device (19) is infinitely adjustable, and that a hydraulic clutch operating device is provided to operate the friction clutch.

28. Clutch arrangement for a motor vehicle comprising:
- a hydraulically operated friction clutch, the pressure plate arrangement of which has:
a) a clutch housing (9), which can be fastened to a flywheel (1) and is rotatable around an axis of rotation (3),
b) a pressure plate (11), which is disposed in the clutch housing (9) and is fixed against relative rotation with this, while being axially displaceable, can be supported on the flywheel (1) via friction linings of a clutch disc (23),
c) a diaphragm spring (13) supported under prestress between a shoulder of the clutch housing (9) and a shoulder of the pressure plate (11),
d) an adjustment device (19) disposed in the path of the support of the diaphragm spring (13) between the diaphragm spring (13) and the pressure plate (11), which has at least one movable wear path compensation member (31), which causes an axial movement of the pressure plate (11) away from the diaphragm spring (13) when the friction linings (21) of the clutch disc (23) are worn and the friction clutch is disengaged,
e) a play transfer device arrangement (37) guided so as to be at least approximately axially movable on the pressure plate (11), but arrestable on the pressure plate (11) by friction, said arrangement abutting against a component (1; 9c) firmly connected operationally to the clutch housing (9) during the engagement action to limit its movement directed towards the flywheel (1), and forming together with the pressure plate (11) an adjustment path restriction means active during the disengagement action for the wear path compensation member (31).

29. Clutch arrangement according to Claim 28, wherein the pressure plate arrangement is constructed in accordance with one of Claims 1 to 26.

## Revendications (Revendications pour l'(les) Etat(s) contractant(s) suivant(s): DE, FR, GB, SE)

1. Dispositif avec plateau de pression pour un embrayage à friction dans un véhicule automobile, comprenant
- un carter d'embrayage (9) qui peut être fixé contre un volant moteur (1), qui peut tourner autour d'un axe de rotation (3),
- un plateau de pression (11), monté dans le carter d'embrayage (9) sans possibilité de rotation par rapport à ce dernier, mais de manière à pouvoir se déplacer dans le sens axial, qui peut s'appuyer contre le volant moteur (1) par l'intermédiaire de garnitures de friction (21) d'un disque d'embrayage (23),
- un ressort à membrane (13) qui s'appuie avec précontrainte entre une surface de contact du carter d'embrayage (9) et une surface de contact du plateau de pression (11), et
- un dispositif de compensation du jeu (19), disposé dans le trajet d'appui du ressort à membrane (13) entre le ressort à membrane (13) et le plateau de pression (11), lequel dispositif de compensation du jeu comporte au moins un organe mobile de compensation du déplacement dû à l'usure (31), par lequel le plateau de pression (11) est déplacé dans le sens axial en s'écartant du ressort à membrane (13), en cas d'usure des garnitures de friction (21) du disque d'embrayage (23) et en présence d'un embrayage à friction en position débrayée,
plusieurs dispositifs transmetteurs de jeu (37) répartis sur la périphérie du plateau de pression (11), étant guidés de manière à pouvoir se déplacer au moins approximativement dans le sens axial, mais pouvant être bloqués par friction contre le plateau de pression (11), et
des premières butées (51) étant prévues sur un organe, relié en cours de service avec le carter d'embrayage (9), lesquelles limitent le mouvement des dispositifs transmetteurs de jeu (37) vers le volant moteur (1), et les dispositifs transmetteurs de jeu (37) étant munis de deuxièmes butées (45),
caractérisé en ce que les deux butées (45) et le plateau de pression (11) forment ensemble un dispositif de limitation du déplacement de compensation pour l'organe de compensation du déplacement dû à l'usure (31), et en ce que les dispositifs transmetteurs de jeu (37) sont guidés dans des orifices (41) réalisés dans le plateau de pression (11) au moins approximativement parallèlement à l'axe de rotation (3), et peuvent être bloqués par un effet d'autoblocage dans les orifices (41).

2. Dispositif selon la revendication 1, caractérisé en ce que des moyens élastiques (53) mettent les dispositifs transmetteurs de jeu (37) en précontrainte dans leur position d'autoblocage, de telle sorte que le plateau de pression (11) entraîne les dispositifs transmetteurs de jeu (37) pendant un mouvement de déblocage du plateau de pression (11).

3. Dispositif selon la revendication 1 ou 2, caractérisé en ce que la deuxième butée (45 ; 45a, b) s'appuie directement contre le ressort à membrane (13 ; 13a, b) et en ce que la deuxième butée (45 ; 45a, b) et le ressort à membrane (13 ; 13a, b) sont conçus de telle sorte que, pendant un processus de débrayage de l'embrayage à friction, il se produit une composante de force favorisant l'effet d'autoblocage du dispositif transmetteur de jeu (37 ; 37a, b) dans l'orifice (41 ; 41a, b) du plateau de pression (11 ; 11a, b).

4. Dispositif selon la revendication 3, caractérisé en ce que les surfaces de contact opposées de la deuxième butée (45a) et du ressort à membrane (13a), par rapport à un plan perpendiculaire à l'axe, forment un angle d'inclinaison (α), qui est choisi de telle sorte que la force d'appui comprend, le long de la surface de contact, une composante favorisant l'effet d'autoblocage, laquelle est supérieure à la force de frottement exercée entre les surfaces de contact.

5. Dispositif selon l'une quelconque des revendications 1 à 4, caractérisé en ce que, de plus, chaque dispositif transmetteur de jeu (37d), bloqué par friction contre le plateau de pression (11d), est guidé de manière à pouvoir se déplacer en direction de l'axe de rotation (3d).

6. Dispositif selon la revendication 5, caractérisé en ce que chaque dispositif transmetteur de jeu (37d) comprend un boulon mobile (39d), conçu en forme de douille de serrage, qui est guidé de manière à pouvoir se déplacer, à l'encontre d'une force de frottement exercée par la douille de serrage, dans un orifice (41d) réalisé dans le plateau de pression (11d) au moins presque parallèlement à l'axe de rotation (3d).

7. Dispositif selon l'une quelconque des revendications 1 à 6, caractérisé en ce que chaque dispositif transmetteur de jeu (37) comporte un boulon mobile (39), guidé dans un orifice (41) du plateau de pression (11), et un levier (43), formant la deuxième butée (45), fixé contre ledit boulon mobile et monté sur la face du plateau de pression (11) opposée au disque d'embrayage (23).

8. Dispositif selon la revendication 7, caractérisé en ce que le levier (43c-e) s'appuie, indépendamment du ressort à membrane (13c-e), contre l'organe de compensation du déplacement dû à l'usure (31c-e) et en ce que le plateau de pression (11c-e) est associé à un dispositif de déblocage exerçant une sollicitation sur le plateau de pression (11c-e) dans le sens du déblocage.

9. Dispositif selon la revendication 7, caractérisé en ce que le levier (43 ; 43a, b) s'appuie contre le ressort à membrane (13 ; 13a, b).

10. Dispositif selon la revendication 8 ou 9, caractérisé en ce que le dispositif de compensation du jeu (19a, b, d, e) est en appui entre la zone du pourtour du ressort à membrane (13a, b, d, e) et le plateau de pression (11a, b, d, e).

11. Dispositif selon la revendication 8 ou 9, caractérisé en ce que le dispositif de compensation du jeu (19 ; 19c) est en appui entre une zone du ressort à membrane (13 ; 13c), de diamètre inférieur au diamètre extérieur, et le plateau de pression (11 ; 11c).

12. Dispositif selon la revendication 11, caractérisé en ce que les leviers (43 ; 43c) sont disposés sur la face extérieure du carter d'embrayage (9 ; 9c) et traversent des orifices (47 ; 47c) du carter d'embrayage (9 ; 9c) jusqu'à entrer en contact avec le ressort à membrane (13) ou traversent des orifices (81) du ressort à membrane (13c) jusqu'à entrer en contact avec une bague de support (17c) en appui contre le ressort à membrane (13).

13. Dispositif selon l'une quelconque des revendications 7 à 12, caractérisé en ce que chaque dispositif transmetteur de jeu (37a, d, e) n'est pas soumis, en substance, à une force centrifuge par rapport à son point de basculement dans l'orifice (41a, d, e) du plateau de pression (11a, d, e).

14. Dispositif selon l'une quelconque des revendications 7 à 13, caractérisé en ce que chaque dispositif transmetteur de jeu (37) est fixé, par rapport à l'orifice (41) du plateau de pression (11), de manière à résister à la torsion.

15. Dispositif selon la revendication 14, caractérisé en ce que, sur le côté de l'orifice (41b) contigu à l'axe de rotation, un tenon de guidage, en particulier conçu sous forme de douille de serrage (75) flexible dans le sens radial, avance en saillie sur le plateau de pression (11b), parallèlement à l'axe de l'orifice (41b), et vient en prise dans un alésage (77) réalisé dans le levier (43b) du dispositif transmetteur de jeu (37b).

16. Dispositif selon la revendication 14, caractérisé en ce que le contour de la butée (45a, d, e) formée par le levier (43a, d, e) de chaque dispositif transmetteur de jeu (37a, d, e) est choisi de telle sorte que le dispositif transmetteur de jeu (37a, d, e) est bloqué de manière à résister à la torsion par rapport au ressort à membrane (13a) ou à l'une de ses bagues de support (61d, e) ou au plateau de pression.

17. Dispositif selon la revendication 14, caractérisé en ce que le levier (43 ; 43b, c) de chaque dispositif transmetteur de jeu (37 ; 37b, c) s'engage dans un orifice (47 ; 47b, c) du carter d'embrayage (9 ; 9b, c) et bloque le dispositif transmetteur de jeu (37 ; 37b, c) de manière à résister à la torsion par rapport au carter d'embrayage (9 ; 9b, c).

18. Dispositif selon l'une quelconque des revendications 1 à 17, caractérisé en ce qu'un ressort (53 ; 53a-c, e) est disposé entre chaque dispositif transmetteur de jeu (37 ; 37a-c, e) et le plateau de pression (11 ; 11a-c, e) et précontraint la deuxième butée (45 ; 45a-c, e) contre le plateau de pression (11 ; 11a-c, e).

19. Dispositif selon la revendication 18, caractérisé en ce que chaque dispositif transmetteur de jeu (37 ; 37a, b, e) comporte un boulon mobile (39 ; 39a, b, e), guidé de manière à pouvoir se déplacer dans un orifice (41 ; 41a, b, e) du plateau de pression (11 ; 11a, b, e), lequel boulon mobile comporte un collet de butée (49 ; 49a, b, e) sur son extrémité orientée vers le volant moteur (1 ; 1a, b, e), et en ce que le ressort (53 ; 53a, b, e) vient en appui entre le collet de butée (49 ; 49a, b, e) et le plateau de pression (11 ; 11a, b, e).

20. Dispositif selon la revendication 19, caractérisé en ce que le ressort est conçu sous forme de ressort conique (53 ; 53a, b), entoure le boulon mobile (39 ; 39a, b), s'appuie avec son extrémité de plus petit diamètre contre le collet de butée (49 ; 49a, b) et, pour exercer un couple de compensation du jeu sur le boulon mobile (39 ; 39a, b), s'appuie avec son extrémité de plus grand diamètre, décalée radialement vers l'extérieur par rapport au boulon mobile (39 ; 39a, b), contre le plateau de pression (11 ; 11a, b).

21. Dispositif selon la revendication 20, caractérisé en ce que le plateau de pression (11 ; 11a, b) comporte un trou borgne (55 ; 55a, b), excentré par rapport à l'orifice (41 ; 41a, b), guidant le boulon mobile (39 ; 39a, b), et destiné à guider l'extrémité de plus grand diamètre du ressort conique (53 ; 53a, b).

22. Dispositif selon la revendication 18, caractérisé en ce que chaque dispositif transmetteur de jeu (37c, e) comporte un boulon mobile (39c, e) guidé de manière à pouvoir se déplacer dans un orifice (41c, e) du plateau de pression (11c, e), et en ce que le ressort est conçu sous forme de ressort de traction (53c, e) et, pour exercer un couple de compensation du jeu par rapport au boulon mobile (39c, e), est décalé radialement vers l'extérieur sur le plateau de pression (11c, e) et est accroché à une pièce (43c, e) fixée à une extrémité du boulon mobile (39c, e) éloignée du volant moteur.

23. Dispositif selon l'une quelconque des revendications 18 à 22, caractérisé en ce que chaque dispositif transmetteur de jeu (37 ; 37a-c, e) comporte un boulon mobile (39 ; 39a-c, e), guidé de manière à pouvoir se déplacer dans un orifice (41 ; 41a-c, e) du plateau de pression (11 ; 11a-c, e), et en ce que le boulon mobile (39 ; 39a-c, e) et/ou l'orifice (41 ; 41a-c, e) comportent des moyens permettant d'augmenter la force de frottement.

24. Dispositif selon l'une quelconque des revendications 1 à 23, caractérisé en ce que l'organe de compensation du déplacement dû à l'usure comprend une bague conique (31), se rétrécissant dans le sens radial vers l'extérieur, fendue dans le sens radial, concentrique par rapport à l'axe de rotation (3), laquelle bague conique est guidée par une contrainte interne, exercée dans le sens radial, dans le sens d'une modification du diamètre, en particulier d'un agrandissement du diamètre, sur une surface de guidage (33) du plateau de pression (11), orientée vers le ressort à membrane (13), en particulier une surface inclinée en forme de cône.

25. Dispositif selon la revendication 24, caractérisé en ce qu'une bague de support (67) est disposée entre la bague conique (31a) et le ressort à membrane (13a), laquelle bague de support est centrée contre le plateau de pression (11a) par plusieurs goupilles de centrage (69) parallèles à l'axe de rotation (3) et décalées les unes par rapport aux autres dans le sens de rotation.

26. Dispositif avec plateau de pression selon l'une quelconque des revendications 1 à 25, caractérisé en ce que l'organe de compensation du déplacement dû à l'usure (31) du dispositif de compensation du jeu (19) peut être ajusté progressivement et en ce qu'il est prévu un dispositif d'embrayage hydraulique, destiné à commander l'embrayage à friction.

27. Dispositif d'embrayage pour un véhicule automobile, comprenant :
- un embrayage à friction actionné par voie hydraulique, dont le dispositif avec plateau de pression comporte :
a) un carter d'embrayage (9) qui peut être fixé contre un volant moteur (1), qui peut tourner autour d'un axe de rotation (3),
b) un plateau de pression (11), monté dans le carter d'embrayage (9) sans possibilité de rotation par rapport à ce dernier, mais de manière à pouvoir se déplacer dans le sens axial, qui peut s'appuyer contre le volant moteur (1) par l'intermédiaire de garnitures de friction (21) d'un disque d'embrayage (23),
c ) un ressort à membrane (13) qui s'appuie avec précontrainte entre une surface de contact du carter d'embrayage (9) et une surface de contact du plateau de pression (11),
d) un dispositif de compensation du jeu (19), disposé dans le trajet d'appui du ressort à membrane (13) entre le ressort à membrane (13) et le plateau de pression (11), lequel dispositif de compensation du jeu comporte au moins un organe mobile de compensation du déplacement dû à l'usure (31), par lesquels le plateau de pression (11) est déplacé progressivement dans le sens axial en s'écartant du ressort à membrane (13), en cas d'usure des garnitures de friction (21) du disque d'embrayage (23) et en présence d'un embrayage à friction en position débrayée, et
e) un dispositif transmetteur de jeu (37) guidé contre le plateau de pression (11) de manière à pouvoir se déplacer au moins approximativement dans le sens axial, mais pouvant être bloqué par friction contre le plateau de pression (11), lequel dispositif transmetteur de jeu, pendant le processus d'embrayage, vient buter contre un composant (1 ; 9c) relié de manière fixe en cours de service avec le carter d'embrayage (9), afin de limiter son déplacement orienté vers le volant moteur (1), et forme avec le plateau de pression (11) un dispositif de limitation du déplacement de compensation pour l'organe de compensation du déplacement dû à l'usure (31), qui entre en action pendant le processus de débrayage.

28. Dispositif d'embrayage selon la revendication 27, dans lequel le dispositif avec plateau de pression est conçu selon l'une quelconque des revendications 1 à 26.

## Revendications (Revendications pour l'(les) Etat(s) contractant(s) suivant(s): ES)

1. Dispositif avec plateau de pression pour un embrayage à friction dans un véhicule automobile, comprenant
- un carter d'embrayage (9) qui peut être fixé contre un volant moteur (1), qui peut tourner autour d'un axe de rotation (3),
- un plateau de pression (11), monté dans le carter d'embrayage (9) sans possibilité de rotation par rapport à ce dernier, mais de manière à pouvoir se déplacer dans le sens axial, qui peut s'appuyer contre le volant moteur (1) par l'intermédiaire de garnitures de friction (21) d'un disque d'embrayage (23),
- un ressort à membrane (13) qui s'appuie avec précontrainte entre une surface de contact du carter d'embrayage (9) et une surface de contact du plateau de pression (11), et
- un dispositif de compensation du jeu (19), disposé dans le déplacement d'appui du ressort à membrane (13) entre le ressort à membrane (13) et le plateau de pression (11), lequel dispositif de compensation du jeu comporte au moins un organe mobile de compensation du déplacement dû à l'usure (31), par lequel le plateau de pression (11) est déplacé dans le sens axial en s'écartant du ressort à membrane (13), en cas d'usure des garnitures de friction (21) du disque d'embrayage (23) et en présence d'un embrayage à friction en position débrayée,
plusieurs dispositifs transmetteurs de jeu (37) répartis sur la périphérie du plateau de pression (11), étant guidés de manière à pouvoir se déplacer au moins approximativement dans le sens axial, mais pouvant être bloqués par friction contre le plateau de pression (11), et
des premières butées (51) étant prévues sur un organe, relié en cours de service avec le carter d'embrayage (9), lesquelles limitent le mouvement des dispositifs transmetteurs de jeu (37) vers le volant moteur (1), et les dispositifs transmetteurs de jeu (37) étant munis de deuxièmes butées (45),
caractérisé en ce que les deux butées (45) et le plateau de pression (11) forment ensemble un dispositif de limitation du déplacement de compensation pour l'organe de compensation du déplacement dû à l'usure (31).

2. Dispositif selon la revendication 1, caractérisé en ce que les dispositifs transmetteurs de jeu (37) sont guidés dans des orifices (41) réalisés dans le plateau de pression (11) au moins approximativement parallèlement à l'axe de rotation (3), et peuvent être bloqués par un effet d'autoblocage dans les orifices (41).

3. Dispositif selon la revendication 2, caractérisé en ce que des moyens élastiques (53) mettent les dispositifs transmetteurs de jeu (37) en précontrainte dans leur position d'autoblocage, de telle sorte que le plateau de pression (11) entraîne les dispositifs transmetteurs de jeu (37) pendant un mouvement de déblocage du plateau de pression (11).

4. Dispositif selon la revendication 2 ou 3, caractérisé en ce que la deuxième butée (45 ; 45a, b) s'appuie directement contre le ressort à membrane (13 ; 13a, b) et en ce que la deuxième butée (45 ; 45a, b) et le ressort à membrane (13 ; 13a, b) sont conçus de telle sorte que, pendant un processus de débrayage de l'embrayage à friction, il se produit une composante de force favorisant l'effet d'autoblocage du dispositif transmetteur de jeu (37 ; 37a, b) dans l'orifice (41 ; 41a, b) du plateau de pression (11 ; 11a, b).

5. Dispositif selon la revendication 4, caractérisé en ce que les surfaces de contact opposées de la deuxième butée (45a) et du ressort à membrane (13a), par rapport à un plan perpendiculaire à l'axe, forment un angle d'inclinaison (α), qui est choisi de telle sorte que la force d'appui comprend, le long de la surface de contact, une composante favorisant l'effet d'autoblocage, laquelle est supérieure à la force de frottement exercée entre les surfaces de contact.

6. Dispositif selon l'une quelconque des revendications 1 à 5, caractérisé en ce que chaque dispositif transmetteur de jeu (37d), bloqué par friction contre le plateau de pression (11d), est guidé de manière à pouvoir se déplacer en direction de l'axe de rotation (3d).

7. Dispositif selon la revendication 6, caractérisé en ce que chaque dispositif transmetteur de jeu (37d) comprend un boulon mobile (39d), conçu en forme de douille de serrage, qui est guidé de manière à pouvoir se déplacer, à l'encontre d'une force de frottement exercée par la douille de serrage, dans un orifice (41d) réalisé dans le plateau de pression (11d) au moins presque parallèlement à l'axe de rotation (3d).

8. Dispositif selon l'une quelconque des revendications 1 à 7, caractérisé en ce que chaque dispositif transmetteur de jeu (37) comporte un boulon mobile (39), guidé dans un orifice (41) du plateau de pression (11), et un levier (43), formant la deuxième butée (45), fixé contre ledit boulon mobile et monté sur la face du plateau de pression (11) opposée au disque d'embrayage (23).

9. Dispositif selon la revendication 8, caractérisé en ce que le levier (43c-e) s'appuie, indépendamment du ressort à membrane (13c-e), contre l'organe de compensation du déplacement dû à l'usure (31c-e) et en ce que le plateau de pression (11c-e) est associé à un dispositif de déblocage exerçant une sollicitation sur le plateau de pression (11c-e) dans le sens du déblocage.

10. Dispositif selon la revendication 8, caractérisé en ce que le levier (43 ; 43a, b) s'appuie contre le ressort à membrane (13 ; 13a, b).

11. Dispositif selon la revendication 9 ou 10, caractérisé en ce que le dispositif de compensation du jeu (19a, b, d, e) est en appui entre la zone du pourtour du ressort à membrane (13a, b, d, e) et le plateau de pression (11a, b, d, e).

12. Dispositif selon la revendication 9 ou 10, caractérisé en ce que le dispositif de compensation du jeu (19 ; 19c) est en appui entre une zone du ressort à membrane (13 ; 13c), de diamètre inférieur au diamètre extérieur, et le plateau de pression (11 ; 11c).

13. Dispositif selon la revendication 12, caractérisé en ce que les leviers (43 ; 43c) sont disposés sur la face extérieure du carter d'embrayage (9 ; 9c) et traversent des orifices (47 ; 47c ) du carter d'embrayage (9 ; 9c) jusqu'à entrer en contact avec le ressort à membrane (13) ou traversent des orifices (81) du ressort à membrane (13c) jusqu'à entrer en contact avec une bague de support (17c) en appui contre le ressort à membrane (13).

14. Dispositif selon l'une quelconque des revendications 8 à 13, caractérisé en ce que chaque dispositif transmetteur de jeu (37a, d, e) n'est pas soumis, en substance, à une force centrifuge par rapport à son point de basculement dans l'orifice (41a, d, e) du plateau de pression (11a, d, e).

15. Dispositif selon l'une quelconque des revendications 8 à 14, caractérisé en ce que chaque dispositif transmetteur de jeu (37) est fixé, par rapport à l'orifice (41) du plateau de pression (11), de manière à résister à la torsion.

16. Dispositif selon la revendication 15, caractérisé en ce que, sur le côté de l'orifice (41b) contigu à l'axe de rotation, un tenon de guidage, en particulier conçu sous forme de douille de serrage (75) flexible dans le sens radial, avance en saillie sur le plateau de pression (11b), parallèlement à l'axe de l'orifice (41b), et vient en prise dans un alésage (77) réalisé dans le levier (43b) du dispositif transmetteur de jeu (37b).

17. Dispositif selon la revendication 15, caractérisé en ce que le contour de la butée (45a, d, e) formée par le levier (43a, d, e) de chaque dispositif transmetteur de jeu (37a, d, e) est choisi de telle sorte que le dispositif transmetteur de jeu (37a, d, e) est bloqué de manière à résister à la torsion par rapport au ressort à membrane (13a) ou à l'une de ses bagues de support (61d, e) ou au plateau de pression.

18. Dispositif selon la revendication 15, caractérisé en ce que le levier (43 ; 43b, c) de chaque dispositif transmetteur de jeu (37 ; 37b, c) s'engage dans un orifice (47 ; 47b, c) du carter d'embrayage (9 ; 9b, c) et bloque le dispositif transmetteur de jeu (37 ; 37b, c) de manière à résister à la torsion par rapport au carter d'embrayage (9 ; 9b, c).

19. Dispositif selon l'une quelconque des revendications 1 à 18, caractérisé en ce qu'un ressort (53 ; 53a-c, e) est disposé entre chaque dispositif transmetteur de jeu (37 ; 37a-c, e) et le plateau de pression (11 ; 11a-c, e) et précontraint la deuxième butée (45 ; 45a-c, e) contre le plateau de pression (11 ; 11a-c, e).

20. Dispositif selon la revendication 19, caractérisé en ce que chaque dispositif transmetteur de jeu (37 ; 37a, b, e) comporte un boulon mobile (39 ; 39a, b, e), guidé de manière à pouvoir se déplacer dans un orifice (41 ; 41a, b, e) du plateau de pression (11 ; 11a, b, e), lequel boulon mobile comporte un collet de butée (49 ; 49a, b, e) sur son extrémité orientée vers le volant moteur (1 ; 1a, b, e), et en ce que le ressort (53 ; 53a, b, e) vient en appui entre le collet de butée (49 ; 49a, b, e) et le plateau de pression (11 ; 11a, b, e).

21. Dispositif selon la revendication 20, caractérisé en ce que le ressort est conçu sous forme de ressort conique (53 ; 53a, b), entoure le boulon mobile (39 ; 39a, b), s'appuie avec son extrémité de plus petit diamètre contre le collet de butée (49 ; 49a, b) et, pour exercer un couple de compensation du jeu sur le boulon mobile (39 ; 39a, b), s'appuie avec son extrémité de plus grand diamètre, décalée radialement vers l'extérieur par rapport au boulon mobile (39 ; 39a, b), contre le plateau de pression (11 ; 11a, b).

22. Dispositif selon la revendication 21, caractérisé en ce que le plateau de pression (11 ; 11a, b) comporte un trou borgne (55 ; 55a, b), excentré par rapport à l'orifice (41 ; 41a, b), guidant le boulon mobile (39 ; 39a, b), et destiné à guider l'extrémité de plus grand diamètre du ressort conique (53 ; 53a, b).

23. Dispositif selon la revendication 19, caractérisé en ce que chaque dispositif transmetteur de jeu (37c, e) comporte un boulon mobile (39c, e) guidé de manière à pouvoir se déplacer dans un orifice (41c, e) du plateau de pression (11c, e), et en ce que le ressort est conçu sous forme de ressort de traction (53c, e) et, pour exercer un couple de compensation du jeu par rapport au boulon mobile (39c, e), est décalé radialement vers l'extérieur sur le plateau de pression (11c, e) et est accroché à une pièce (43c, e) fixée à une extrémité du boulon mobile (39c, e) éloignée du volant moteur.

24. Dispositif selon l'une quelconque des revendications 19 à 23, caractérisé en ce que chaque dispositif transmetteur de jeu (37 ; 37a-c, e) comporte un boulon mobile (39 ; 39a-c, e), guidé de manière à pouvoir se déplacer dans un orifice (41 ; 41a-c, e) du plateau de pression (11 ; 11a-c, e), et en ce que le boulon mobile (39 ; 39a-c, e) et/ou l'orifice (41 ; 41a-c, e) comportent des moyens permettant d'augmenter la force de frottement.

25. Dispositif selon l'une quelconque des revendications 1 à 24, caractérisé en ce que l'organe de compensation du déplacement dû à l'usure comprend une bague conique (31), se rétrécissant dans le sens radial vers l'extérieur, fendue dans le sens radial, concentrique par rapport à l'axe de rotation (3), laquelle bague conique est guidée par une contrainte interne, exercée dans le sens radial, dans le sens d'une modification du diamètre, en particulier d'un agrandissement du diamètre, sur une surface de guidage (33) du plateau de pression (11), orientée vers le ressort à membrane (13), en particulier une surface inclinée en forme de cône.

26. Dispositif selon la revendication 25, caractérisé en ce qu'une bague de support (67) est disposée entre la bague conique (31a) et le ressort à membrane (13a), laquelle bague de support est centrée contre le plateau de pression (11a) par plusieurs goupilles de centrage (69) parallèles à l'axe de rotation (3) et décalées les unes par rapport aux autres dans le sens de rotation.

27. Dispositif avec plateau de pression selon l'une quelconque des revendications 1 à 26, caractérisé en ce que l'organe de compensation du déplacement dû à l'usure (31) du dispositif de compensation du jeu (19) peut être ajusté progressivement et en ce qu'il est prévu un dispositif d'embrayage hydraulique, destiné à commander l'embrayage à friction.

28. Dispositif d'embrayage pour un véhicule automobile, comprenant :
- un embrayage à friction actionné par voie hydraulique, dont le dispositif avec plateau de pression comporte :
a) un carter d'embrayage (9) qui peut être fixé contre un volant moteur (1), qui peut tourner autour d'un axe de rotation (3),
b) un plateau de pression (11), monté dans le carter d'embrayage (9) sans possibilité de rotation par rapport à ce dernier, mais de manière à pouvoir se déplacer dans le sens axial, qui peut s'appuyer contre le volant moteur (1) par l'intermédiaire de garnitures de friction (21) d'un disque d'embrayage (23),
c ) un ressort à membrane (13) qui s'appuie avec précontrainte entre une surface de contact du carter d'embrayage (9) et une surface de contact du plateau de pression (11),
d) un dispositif de compensation du jeu (19), disposé dans le trajet d'appui du ressort à membrane (13) entre le ressort à membrane (13) et le plateau de pression (11), lequel dispositif de compensation du jeu comporte au moins un organe mobile de compensation du déplacement dû à l'usure (31), par lesquels le plateau de pression (11) est déplacé progressivement dans le sens axial en s'écartant du ressort à membrane (13), en cas d'usure des garnitures de friction (21) du disque d'embrayage (23) et en présence d'un embrayage à friction en position débrayée, et
e) un dispositif transmetteur de jeu (37) guidé contre le plateau de pression (11) de manière à pouvoir se déplacer au moins approximativement dans le sens axial, mais pouvant être bloqué par friction contre le plateau de pression (11), lequel dispositif transmetteur de jeu, pendant le processus d'embrayage, vient buter contre un composant (1 **;** 9c) relié de manière fixe en cours de service avec le carter d'embrayage (9), afin de limiter son déplacement orienté vers le volant moteur (1), et forme avec le plateau de pression (11) un dispositif de limitation du déplacement de compensation pour l'organe de compensation du déplacement dû à l'usure (31), qui entre en action pendant le processus de débrayage.

29. Dispositif d'embrayage selon la revendication 28, dans lequel le dispositif avec plateau de pression est conçu selon l'une quelconque des revendications 1 à 26.
